# EUROPEAN PATENT SPECIFICATION

(11) **EP 4 355 837 B1**
(45) Date of publication and mention of the grant of the patent: **26.02.2025**
(21) Application number: 22727457.8
(22) Date of filing: 19.05.2022
(51) Int. Cl.: C09J 163/00, C08G 59/18, C08G 59/50, C08G 59/62, C08L 63/00

(54) **TWO-PART CURABLE COMPOSITIONS**
ZWEITEILIGE HÄRTBARE ZUSAMMENSETZUNGEN
COMPOSITIONS DURCISSABLES BICOMPOSANTS

(30) Priority: 14.06.2021 US 202163202492 P
(43) Date of publication of application: 24.04.2024
(73) Proprietor: 3M Innovative Properties Company, Saint Paul, Minnesota 55133-3427 (US)
(72) Inventor: SCHLECHTE, Jay S., Saint Paul, Minnesota 55133-3427 (US); CHEN, Yaoyao, Saint Paul, Minnesota 55133-3427 (US); THOMPSON, Zachary J., Saint Paul, Minnesota 55133-3427 (US); CHEN, Lianzhou, Saint Paul, Minnesota 55133-3427 (US); WHITE, Kolby L., Saint Paul, Minnesota 55133-3427 (US); STOUT, George M., Saint Paul, Minnesota 55133-3427 (US)
(74) Representative: Vossius & Partner Patentanwälte Rechtsanwälte mbB
(86) International application number: PCT/IB2022/054695
(87) International publication number: WO 2022/263943

(56) References cited:
- EP-A1- 2 135 909
- EP-A1- 2 223 966
- WO-A1-2016/137671

## Description

### Background

Various adhesives have been prepared from curable compositions that contain a first part that includes an amine-containing curing agent and a second part that includes an epoxy resin. To improve the impact resistance of the resulting cured adhesive composition, various core-shell rubber particles have been added to the curable composition.

WO 2016/137671 A1 discloses a two-part adhesive comprising A) a curative part comprising i) an epoxy curative; and ii) a reaction intermediate which is the reaction product of a suspension of core/shell rubber nanoparticles in a liquid epoxy resin and an excess of the epoxy curative; wherein the curative part comprises greater than 1.1 wt% core/shell rubber nanoparticles; and B) an epoxy part comprising iii) a liquid epoxy resin; and iv) greater than 9.1 wt% core/shell rubber nanoparticles.

### Summary

The present invention is as defined in the appended claims.

Although many two-part curable compositions are known for preparing adhesive compositions, it can be challenging to develop first part and second part compositions that have similar rheological properties. Having similar rheological properties are advantageous in terms of combining the first part with the second part together, particularly when using a syringe-type mixing system. The properties of the cured composition are typically improved when the first and second parts are well mixed. The curable compositions described herein have a first part composition and a second part composition that can be adjusted to have viscosity and/or rheological properties that allow for good mixing. Further, many of these compositions can be applied successfully to vertical or nearly vertical substates.

In a first aspect, a curable composition having a first part and a second part is provided. The first part of the curable composition comprises a reaction product of a first reaction mixture comprising contains (1) 55 to 80 weight percent of a polyamine based on a total weight of the first part, the polyamine having at least two -NHR¹ groups wherein each R¹ is independently hydrogen, alkyl, aryl, aralkyl, or alkaryl, 2) 5 to 25 weight percent of a first epoxy resin based on the total weight of the first part, the first epoxy resin being reactive with the polyamine, 3) 2 to 12 weight percent of a first core-shell rubber particle based on the total weight of the first part, the first core-shell rubber particle being dispersed in the first part and having a surface-modifying epoxy-containing group that is reactive with the polyamine, 4) 1 to 12 weight percent of a second core-shell rubber particle based on the total weight of the first part, the second-core shell rubber particle being dispersed in the first part and free of a surface modified epoxy-containing group, 5) 0 to 10 weight percent of a curing agent based on the total weight of the first part, and 6) 0 to 15 weight percent of an inorganic filler based on the total weight of the first part. The second part contains a second epoxy resin and a third core-shell rubber particle and/or fourth core-shell rubber particle, the third core-shell rubber particle and/or the fourth core-shell rubber particle being dispersed in the second part, wherein the third core-shell rubber particle has a surface modified epoxy-containing group and the fourth core-shell rubber particle is free of a surface modified epoxy-containing group.

In a second aspect (not claimed), a cured composition is provided that is a reaction product of the curable composition having a first part and a second part as described in the first aspect. The cured composition is often positioned adjacent to a first substrate or positioned between a first and second substrate.

In a third aspect (not claimed), an article is provided that includes a cured composition positioned adjacent to a first substrate. In most embodiments, the cured composition is positioned between a first substrate and a second substrate, wherein the cured composition bonds the first substrate to the second substrate. The cured composition is a reaction product of the curable composition having a first part and a second part as described in the first aspect.

In a fourth aspect, a method of making an article is provided. The method includes providing a curable composition having a first part and a second part as described in the first aspect, preparing a mixture by combining the first part and the second part. positioning the mixture on a first substrate, positioning a second substrate adjacent to the mixture opposite the first substrate, and curing the mixture to bond the first substrate to the second substrate.

### Brief Description of the Drawings

FIG. 1 is a plot of viscosity (Pa-s) versus stress (MPa) for PE-1, PE-2, and PE-4.
FIG. 2 is a plot of viscosity (Pa-s) versus stress (MPa) for Compositions G, J, and H.
FIG. 3 is a plot of viscosity (Pa-s) versus stress (MPa) for Comparative Example 4, Comparative Example 5. and Example 4.

### Detailed Description

A curable composition, a cured composition, an article containing the cured composition, and a method of making the article are disclosed. The curable composition contains at least two parts with the first part containing three different types of curing agents that contain multiple - NHR¹ groups (R¹ is hydrogen, alkyl, aryl, aralkyl, or alkaryl) and with the second part containing an epoxy resin. The first part composition and the second part compositions are selected to control the rheology of the curable composition both before and after combination of the first part with the second part. The curable composition includes two types of core-shell rubber particles (CSR particles). A first type has of CSR particles have epoxy groups on the surface that allow the CSR particles to get incorporated into the polymeric network of the cured composition. The first type of CSR particles is usually in both the first part and second part compositions. A second type of CSR particles is added to alter the rheological properties, particularly of the first part composition. Both types of CSR particles function to enhance the impact resistance, toughness, and peel strength of the cured composition without affecting the modulus and/or glass transition temperature of the cured composition as is common with various liquid rubbers and other types of tougheners.

As used herein, the terms "a," "an," and "the" are not intended to refer to only a singular entity but include the general class of which a specific example may be used for illustration. These terms can be used interchangeably with the term "at least one."

The tenn "and/or" means one or all listed elements or a combination of any two or more of the listed elements.

The term "alkyl" refers to a monovalent group that is a radical of an alkane and includes groups that are linear, branched, cyclic, bicyclic, or a combination thereof. Unless otherwise indicated, the alkyl groups typically contain from 1 to 30 carbon atoms. In some embodiments, the alkyl groups contain 1 to 20 carbon atoms, 1 to 10 carbon atoms, 1 to 6 carbon atoms, 1 to 4 carbon atoms, or 1 to 3 carbon atoms. Example alkyl groups include, but are not limited to, methyl, ethyl, n-propyl, n-butyl, n-pentyl, isobutyl, t-butyl, isopropyl, n-octyl, n-heptyl, ethylhexyl, cyclopentyl, cyclohexyl, cycloheptyl, adamantyl, norbornyl, and the like.

The term "aryl" refers to a monovalent group that is aromatic and carbocyclic. The aryl group has at least one aromatic ring. Optionally, the aromatic ring can have one or more additional carbocyclic rings that are fused or attached to the aromatic ring. Any additional rings can be unsaturated, saturated, or aromatic. Unless otherwise specified, aryl groups often have 6 to 20 carbon atoms, 6 to 18 carbon atoms, 6 to 16 carbon atoms, 6 to 12 carbon atoms, or 6 to 10 carbon atoms. Examples of an aryl group include phenyl, naphthyl, biphenyl, phenanthryl, and anthracyl.

The term "alkaryl" refers to a monovalent group that is an aryl substituted with an alkyl group (e.g., as in a tolyl group): the alkaryl can be viewed as being an arylene bonded to an alkyl. Unless otherwise indicated, the alkyl portion often has 1 to 10 carbon atoms, 1 to 6 carbon atoms, or 1 to 4 carbon atoms and the aryl (or arylene) portion often has 6 to 20 carbon atoms, 6 to 18 carbon atoms, 6 to 16 carbon atoms, 6 to 12 carbon atoms, or 6 to 10 carbon atoms.

The term "aralkyl" refers to a monovalent group that is an alkyl group substituted with an aryl group (e.g., as in a benzyl group); the aralkyl group can be viewed as being an alkylene bonded to an aryl. Unless otherwise indicated, the alkyl (or alkylene) portion often has 1 to 10 carbon atoms, 1 to 6 carbon atoms, or 1 to 4 carbon atoms and the aryl portion often has 6 to 20 carbon atoms, 6 to 18 carbon atoms, 6 to 16 carbon atoms, 6 to 12 carbon atoms, or 6 to 10 carbon atoms.

The term "curable composition" refers to the combination of the first part composition plus the second part composition.

The "first part composition" is the portion of the curable composition that contains at least one or more polyamine compounds. The terms "first part composition" and "first part" are used interchangeably.

The "second part composition" is the portion of the curable composition that contains at least the epoxy resin that is available to react with an unreacted polyamine from the first part composition. The terms "second part composition" and "second part" are used interchangeably.

The term "polyamine" refers to a compound having at least two nitrogen-containing groups of formula -NHR¹ where R¹ is hydrogen, alkyl, aryl, aralkyl, or alkaryl. In most embodiments, R¹ is hydrogen or alkyl. In many embodiments, R¹ is hydrogen.

The terms "core-shell rubber particle" and "CSR particle" are used interchangeably.

As used herein, the term "room temperature" refers to a temperature of about 20°C to about 25°C or about 22°C to about 25°C.

The phrase "in a range of" or a similar phrase refers to all values within the stated range plus the endpoints of the range.

### First Part Composition

The first part composition contains a reaction product of a first reaction mixture comprising (1) a polyamine having at least two -NHR¹ groups where each R¹ is independently hydrogen, alkyl, aryl, aralkyl, or alkaryl, (2) a first epoxy resin, (3) a first core-shell rubber particle dispersed in the first part, the first core-shell rubber particle having a surface modified epoxy-containing group. (4) a second core-shell rubber particle dispersed in the first part, wherein the second core-shell rubber particle is free of the surface modified epoxy-containing group (e.g., the second core-shell rubber particle is free of surface modifying groups that can react with a polyamine or epoxy resin), (5) an optional curing agent, and (6) an optional inorganic filler.

The reaction product of the first reaction mixture contains (1) first curing agent that is an unreacted polyamine, (2) a second curing agent that is a first epoxy resin-polyamine adduct that has terminal -NR¹ groups, (3) a third curing agent that is a first core-shell rubber particle-polyamine adduct that has terminal -NR¹ groups. (4) a second core-shell rubber particle that is free of surface modified epoxy-containing groups (e.g., free of surface modified groups that can react with a polyamine or an epoxy resin), (5) an optional curing agent, and (6) an optional inorganic filler. The -NHR¹ groups of the three different types of curing agents are reactive with the second epoxy resin in the second part composition. Each of these components are described further below.

### First curing agent: polyamine

A polyamine, which is the first curing agent, is included in the first part of the curable composition. The polyamine contains at least two amino groups that are primary and/or secondary amino groups. That is, the polyamine has reactive amine hydrogen (-NH) groups. The primary and/or secondary amino groups are of formula -NHR¹ where R¹ is hydrogen, alkyl, aryl, aralkyl, or alkaryl. In many embodiments, R¹ is hydrogen and the polyamine contain a plurality of primary amino groups. Suitable alkyl groups for R¹ often have 1 to 12 carbon atoms, 1 to 8 carbon atoms, 1 to 6 carbon atoms, or 1 to 4 carbon atoms. The alkyl group can be cyclic, branched, linear, or a combination thereof. In many embodiments, the alkyl is methyl. Suitable aryl groups for R¹ usually have 6 to 12 carbon atoms such as a phenyl or biphenyl group. Suitable aralkyl groups for R¹ often have an alkylene portion having 1 to 10 carbon atoms, 1 to 6 carbon atoms, or 1 to 4 carbon atoms and an aryl portion having 6 to 20 carbon atoms, 6 to 12 carbon atoms, or 6 to 10 carbon atoms. An example aralkyl is benzyl. Suitable alkaryl groups for R¹ often have an arylene portion having 6 to 20 carbon atoms, 6 to 18 carbon atoms, 6 to 16 carbon atoms, 6 to 12 carbon atoms, or 6 to 10 carbon atoms and an alkyl portion having 1 to 10 carbon atoms, 1 to 6 carbon atoms, or 1 to 4 carbon atoms. An example alkaryl is a tolyl group. In most embodiments, R¹ is hydrogen or alkyl. The number of -NHR¹ groups can be at least 2, at least 3, at least 4, at least 6, at least 8, at least 10, or even greater than 10. In some embodiments, the number of -NHR¹ groups is no greater than 10, no greater than 8, no greater than 6, or no greater than 4.

Although the polyamine can react with other components of the first part to form various adducts, there is an excess of the polyamine so there is unreacted polyamine available in the first part composition that can function as a first curing agent when mixed with the second part composition. That is, upon mixing of the first part composition with the second part composition, the primary and/or secondary amino groups of the polyamine react with the epoxide groups of the second epoxy resin in the second part of the curable composition. This reaction opens the epoxide (i.e., oxirane) ring of the second epoxy resin and covalently bonds the first polyamine to the second epoxy resin. The reaction results in the formation of divalent linking groups of formula - OCH₂-CH₂-NR¹- where R¹ is the same as defined above.

The polyamine minus the at least two amino groups (i.e., the portion of the polyamine that is not an amino group of formula -NHR¹) can be any suitable aromatic group. aliphatic group, or combination thereof. The polyamine can be either a polymer or a non-polymeric compound and is often a liquid at room temperature.

Some polyamines (i.e., first curing agents) are of Formula (I) with the additional limitation that there are at least two primary amino groups, at least two secondary amino groups, or at least one primary amino group and at least one secondary amino group. That is, there are at least two reactive amine-hydrogen groups.

HNR¹-(R¹-NR¹)ₘ-H (I)

Each R¹ group is independently hydrogen, alkyl, aryl, aralkyl, or alkaryl as defined above. Each R² is independently an alkylene, heteroalkylene, or combination thereof. Suitable alkylene groups often have 1 to 20 carbon atoms, 1 to 16 carbon atoms, 1 to 10 carbon atoms, 1 to 6 carbon atoms, or 1 to 4 carbon atoms. Suitable heteroalkylene groups have at least one oxy, thio, or --NH- group positioned between two alkylene groups. Suitable heteroalkylene groups often have 2 to 50 carbon atoms, 2 to 40 carbon atoms, 2 to 30 carbon atoms, 2 to 20 carbon atoms, or 2 to 10 carbon atoms and up to 20 heteroatoms, up to 16 heteroatoms, up to 12 heteroatoms, or up to 10 heteroatoms. The heteroatoms are often oxy groups. The variable m is an integer equal to at least one and can be up to 10 or higher, up to 5, up to 4, or up to 3. In many embodiments, the first curing agent has a value of m equal to 1, with the first curing agent being a diamine of Formula (I-A).

HNR¹-R¹-NR¹H (I-A)

Some polyamines can have an R² group selected from an alkylene group. Examples include, but are not limited to, ethylene diamine, diethylene triamine, triethylene tetramine, propylene diamine, dipropylene triamine, tetraethylene pentamine, hexaethylene heptamine, hexamethylene diamine, 2-methyl-1,5-pentamethylene diamine, 1-amino-3-aminomethyl-3,3,5-trimethylcyclohexane (also called isophorene diamine), 1,3 bis-aminomethylcyclohexane, 1,10-dimainodecane, 1,12-diaminododecene, norbomane diamine, and the like.

Other polyamines can have an R² group selected from a heteroalkylene group such as a heteroalkylene having oxygen heteroatoms. For example, the curing agent can be a compound such as aminoethylpiperazine, 4,7,10-trioxatridecane-1,13-diamine (TTD) (which is available from TCI America in Portland, OR, USA), or a poly(alkylene oxide) diamine (also called a polyether diamine or a poly(alkylene glycol)) such as a poly(ethylene oxide) diamine, poly(propylene oxide) diamine, poly(tetramethylene oxide), or a copolymer thereof. Polyether diamines are commercially available under the trade designation JEFFAMINE from Huntsman Corporation in The Woodlands, TX, USA. Examples include JEFFAMINE D-230 (a poly(propylene glycol) difunctional primary amine with a number average molecular weight equal to approximately 230 Daltons), D-400 (a poly(propylene glycol) difunctional primary amine with a number average molecular weight equal to approximately 400 Daltons), D-2000 (a poly(propylene glycol) difunctional primary amine with a number average molecular weight equal to approximately 2000 Daltons), and THF-170 (a poly(tetramethylene glyol)-co-poly(propylene glycol) with a combination of primary and secondary amino groups and with a number average molecular weight equal to approximately 1700 Daltons).

The polyamine can also be one or more aromatic rings substituted with multiple amino groups or with amino-containing groups. Such first curing agents include, but are not limited to, xylene diamines (e.g., meta-xylene diamine) or similar compounds. For example, one such first curing agent is commercially available under the trade designation ANCAMINE (e.g., ANCAMINE 2609) from Air Products and Chemicals, Inc. (Allentown, PA, USA) and under the trade designation ARADUR 2965 from Huntsman Corporation (The Woodlands, TX, USA). This curing agent is based on meta-xylene diamine. Another example first curing agent is 4,4'-diaminodiphenyl sulfone (DDS), which is commercially available as ARADUR 9964-1 from Huntsman Corporation.

Still other polyamines include hydrazine, hydrazide, or derivatives thereof(e.g., aminodihydrazide, adipic dihydrazide, and isophthalyl dihydrazide), guanidines or derivatives thereof. and dicyanamide (DICY) or derivatives thereof.

The first part composition can include a plurality of different polyamines. Although some of the polyamine is reacted with other components included in the first part (e.g., the first epoxy resin and the epoxy groups on the first core-shell rubber particles), the first part contains unreacted polyamine that can react with the second epoxy resin when the first part is combined with the second part. In some embodiments, a first polyamine may be selected to react with the other components within the first part while a different second polyamine can be selected to be added to the first part for reaction with the second epoxy resin in the second part. In some embodiments, different polyamines are included in the first part that have different reactivity with the second epoxy resin in the second part and/or that have different reactivity with the first epoxy resin in the first part and/or that have different reactivity with the epoxy groups on the first core-shell rubber particles in the first part.

The first reaction mixture used to form the first part composition typically contains 55 to 80 weight percent of a polyamine based on the total weight of the first part. The amount can be at least 55, at least 60, at least 65, or at least 70 weight percent and up to 80, up to 75, up to 70, or up to 65 weight percent. The range can be, for example, from 55 to 75, from 55 to 70, from 60 to 80, from 60 to 75, or from 60 to 70 weight percent based on the total weight of the first part.

The reaction product of the first reaction mixture (after formation of the adducts of the second curing agent and the third curing agent), which corresponds to the first part composition, often contains 30 to 65 weight percent unreacted polyamine based on a total weight of the first part. The amount can be at least 30, at least 35, at least 40, or at least 45 weight percent and up to 65, up to 60, up to 55, up to 50, or up to 45 weight percent based on the total weight of the first part. The range can be, for example, from 30 to 60, 35 to 65, 35 to 60, 40 to 65, or 40 to 60 weight percent based on the total weight of the first part.

### Second curing agent: first epoxy resin-polyamine adduct with terminal -NR¹ groups

The second curing agent is a first epoxy resin-polyamine adduct, wherein the adduct has at least two -NHR¹ groups. It is the reaction product of the first epoxy resin and the polyamine. The first epoxy resin is typically present to disperse the first core-shell rubber particles and the second core-shell rubber particles included in the first reaction mixture. Group R¹ of the first epoxy resin-polyamine adduct is the same as described above for the polyamine (i.e., the first curing agent). A molar excess of the polyamine (which can be polymeric, if desired) is often used so that the reaction product includes both second curing agent plus free (unreacted) polyamine. The polyamine that is used to form the first epoxy resin-polyamine adduct may be the same or different than the polyamine that is unreacted in the first part. That is, the first epoxy resin-polyamine adduct can be formed from a first polyamine that may be the same or different than the unreacted polyamine that is available in the first part composition for reaction with the second epoxy resin in the second part composition.

In some embodiments, the second curing agent (i.e., the first epoxy resin-polyamine adduct) is the reaction product of a diamine such as those of Formula (I-A) with a diglycidyl epoxide. In other embodiments, the second curing agent is formed from a diamine that is initially reacted with a dicarboxylic acid to form a polyamidoamine having two terminal groups of formula -NHR¹. The polyamidoamine can be prepared as described, for example, in U.S. Patent 5,629,380 (Baldwin et al.). The resulting polyamidoamine can then be reacted with the first epoxy resin to form the second curing agent that is an adduct.

In many embodiments, the first epoxy resin used to form the second curing agent is introduced with the core-shell rubber particles that are dispersed in an epoxy resin. That is, the first core-shell rubber particles and the second core-shell rubber particles are often dispersed in an epoxy resin as purchased from a supplier. The epoxy resins used for dispersing the core-shell rubber particles are often bisphenol A or bisphenol F epoxy resins. Other epoxy resins having more than two epoxy groups per molecule can be use such as triglycidyl-*p*-aminophenol (TGPAP) and tetraglycidyl methylene dianiline (TGMDA). If desired, additional epoxy resins can be used to form the second curing agent in addition to the epoxy resins used to disperse the core-shell rubber particles

The first reaction mixture used to form the first part usually contains 5 to 25 weight percent of the first epoxy resin based on the total weight of the first part. The amount is at least 5, at least 10, at least 12, or at last 15 weight percent and can be up to 25, up to 22, up to 20, or up to 15 weight percent. For example, the range can be from 10 to 22, 10 to 20, or 12 to 20 weight percent based on the total weight of the first part.

The reaction product of the first reaction mixture, which is the first part composition that includes two types of adducts with polyamine, typically contains 20 to 55 weight percent of the first epoxy resin-polyamine adduct (i.e., second curing agent). The amount can be at least 20, at least 22, at least 25, at least 30, or at least 35 weight percent and up to 55, up to 50, up to 48, up to 45, up to 42, up to 40, up to 35, or up to 30 weight percent. For example, the range can be from 22 to 55, 20 to 50, 22 to 50, 20 to 48, or 20 to 45, 20 to 42, or 20 to 40 weight percent based on the total weight of the first part.

### Third curing agent: first CSR particle-polyamine adduct with terminal -NHR¹ groups

The first reaction mixture used to form the first part composition contains a first core-shell rubber (CSR) particle that is surface modified with epoxy groups (i.e., oxirane groups). The first core-shell rubber particles react with polyamine within the first reaction mixture. This reaction results in opening of the epoxy group and attachment of the polyamine, which is a first CSR particle-polyamine adduct. This reaction is shown schematically in Reaction Scheme A where polyamine is of Formula (I-A), for example.

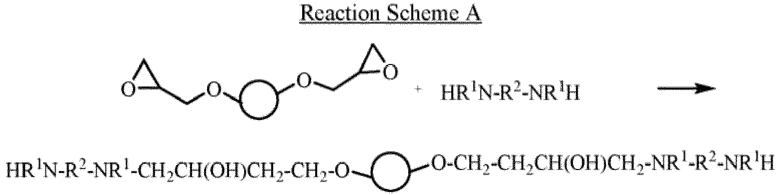

Although the first core-shell rubber particle (represented by a circle having attached glycidyl groups) shown in Reaction Scheme A has two attached epoxy group for case of discussion, the first core-shell rubber particle can have any desired number of attached epoxy groups. The number of epoxy groups can be at least 1, at least 2, at least 3, at least 4, or at least 5. Although the epoxy groups in Reaction Scheme A are shown as being glycidyl groups, other known epoxy-containing groups can be used as well. After rection with the polyamine, the resulting first CSR particle-polyamine adduct shown in Reaction Scheme A has multiple attached groups of formula - CH₂-CH₂-CH(O)CH₂-NR¹-R²-NR¹H. These attached groups have a terminal -NHR¹ group that can react with the second epoxy resin in the second part.

The first core-shell rubber particles typically have a core formed of a first polymeric material and a shell formed of a second polymeric material or a modified version of the first polymeric material. The core is typically a rubbery or elastomeric material and the shell is usually a non-elastomeric material. For example, the core is often a rubber of polybutadiene, styrene/butadiene, or siloxane. The non-elastic material in the shell typically has epoxy groups that can be subsequently reacted with the first curing agent (i.e., polyamine) having multiple -NHR¹ groups. The epoxy groups may arise, for example, from the shell being formed of a (meth)acrylate copolymer having monomeric units derived from glycidyl (meth)acrylate. Such core-shell rubber particles are further described, for example, in U.S. Patent Application 2007/0027233 (Yamaguchi et al.).

The first core-shell rubber particles typically have an average particle diameter that is no greater than 1,000 nanometers, no greater than 500 nanometers, no greater than 400 nanometers, no greater than 300 nanometers, no greater than 200 nanometers, no greater than 100 nanometers, or no greater than 50 nanometers and at least 10 nanometers, at least 20 nanometers, at least 30 nanometers, at least 40 nanometers, or at least 50 nanometers. For example, the first core-shell rubber particles can be in a range of 10 to 1000 nanometers, 20 to 500 nanometers, 20 to 300 nanometers, 50 to 300 nanometers, or 100 to 300 nanometers. The average particles size can be determined using electron micrographic methodology.

The first core-shell rubber particles are often commercially available as a dispersion in an epoxy resin. Thus, when the first CSR particles are reacted with a polyamine to form the first CSR particle-polyamine adduct, the first epoxy resin-polyamine adduct can be formed at the same time. An excess of the polyamine is typically included in the first reaction mixture over the amount needed to react with both the epoxy resin and with the epoxy groups on the surface of the first CSR particles. Suitable commercially available first core-shell rubber particles include, but are not limited to, those listed in Table 1 from Kaneka (Belgium) that are dispersed in epoxy resin.

**Table 1: Example first CSR particles for preparation of first CSR particle-polyamine adducts**

| **Trade Designation** | **Rubber Core Composition** | **Epoxy Resin Dispersant** | **EEW (g/equiv)** | **Wt% CSR particles** | **Size (nm)** |
|---|---|---|---|---|---|
| KANE ACE MX-113 | Styrene/butadiene | Bisphenol A epoxy resin | 262 | 33 | 100 |
| KANE ACE MX-120 | Styrene/butadiene | Bisphenol A epoxy resin | 243 | 25 | 100 |
| KANE ACE MX-125 | Styrene/butadiene | Bisphenol A epoxy resin | 243 | 25 | 100 |
| KANE ACE MX-150 | Polybutadiene | Bisphenol A epoxy resin | 310 | 40 | 100 & 200 blend |
| KANE ACE MX-153 | Polybutadiene | Bisphenol A epoxy resin | 270 | 33 | 100 |
| KANE ACE MX-154 | Polybutadiene | Bisphenol A epoxy resin | 301 | 40 | 100 & 200 blend |
| KANE ACE MX-156 | Polybutadiene | Bisphenol A epoxy resin | 243 | 25 | 100 |
| KANE ACE MX-960 | Siloxane | Bisphenol A epoxy resin | 243 | 25 | 300 |
| KANE ACE MX-134 | Styrene/butadiene | Bisphenol F epoxy resin | 245 | 33 | 100 |
| KANE ACE MX-135 | Styrene/butadiene | Bisphenol F epoxy resin | 220 | 25 | 100 |
| KANE ACE MX-136 | Polybutadiene | Bisphenol F epoxy resin | 217 | 33 | 100 |
| KANE ACE MX-139 | Polybutadiene | Bisphenol F epoxy resin | 236 | 33 | 100 |
| KANE ACE MX-965 | Siloxane | Bisphenol F epoxy resin | 221 | 25 | 300 |
| KANE ACE MX-551 | Styrene/butadiene | Cycloaliphatic epoxy resin | 179 | 25 | 100 |
| KANE ACE MX-553 | Polybutadiene | Cycloaliphatic epoxy resin | 192 | 30 | 100 |
| KANE ACE MX-215 | Styrene/butadiene | Novolac epoxy resin | 231 | 25 | 100 |
| KANE ACE MX-416 | Styrene/butadiene | Tetraglycidyl methylene dianiline (TGMDA) | 149 | 25 | 100 |
| KANE ACE MX-451 | Polybutadiene | triglycidyl paraaminophenol (TGPAP) | 132 | 25 | 100 |

Other first core-shell rubber particles are commercially available as powders. Such powders can be dispersed in an epoxy resin or organic solvent. These powders include those available from Mitsubishi such as METABLEN S-2200.

The first CSR particle-polyamine adduct advantageously improves the impact resistance of the cured composition. This improvement may be attributable to the first CSR particle-polyamine adduct being incorporated into the final polymeric matrix by reacting the terminal - NHR¹ groups with the second epoxy resin in the second part.

In the amount that the first CSR particles is included in the first reaction mixture, the resulting first CSR particle-polyamine adduct amount usually does not significantly affect the rheological properties of the first part. If the first part does not contain enough of the second core-shell rubber particles, however, the curable composition may sag undesirably prior to curing, particularly when applied to a vertical (or near vertical) substrate. That is, the rheological stability of the curable composition may be insufficient. This rheological stability can be overcome somewhat however, by addition of a filler such as fumed silica or other thixotropic materials but care must be taken to avoid increasing the viscosity to the point where the first part cannot be mixed well. Further, the addition of such fillers can negatively decrease the toughness of the cured adhesive composition causing it to fail adhesively rather than cohesively (which is the preferred failure mode).

Typically, the first reaction mixture used to form the first part composition contains 2 to 12 or 3 to 12 weight percent first CSR particles based on the total weight of the first part composition. The amount can be at least 2, at least 3, at least 4, or at least 5 weight percent and up to 12, up to 11, up to 10, up to 9, up to 8, or up to 7 weight percent. For example, the amount can be in a range of 2 to 11, 3 to 11, 2 to 10, or 3 to 10 weight percent based on the total weight of the first part.

The amount of the first CSR particle-polyamine adduct is usually in a range of 2 to 14 weight percent of the first part composition. The amount can be at least 2, at least 3, at least 4, or at least 5 weight percent and up to 14, up to 13, up to 12, up to 11, up to 10, up to 9. up to 8, or up to 7 weight percent. For example, the amount can be in a range of 2 to 13, 2 to 12, 2 to 11, 3 to 11, 2 to 10, or 3 to 10 weight percent based on the total weight of the first part.

### Second Core-Shell Rubber Particles

The first part composition also contains second core-shell rubber particles. Unlike the first core-shell rubber particles, the second-core shell rubber particles are not surface modified with an epoxy group. The second CSR particles are free of a surface modifying epoxy group that can react with a primary or secondary amino group of formula -NHR¹ where R¹ is defined above. Further, the second core-shell rubber particles are not reactive with the second epoxy resin or any other component of the second part composition. The amount of these core-shell rubber particles, unlike the first core-shell rubber particles, can significantly alter the rheology of the first part and the curable composition. Stated differently, the second-core shell rubber particles function like a thickener in the first part composition.

The second core-shell rubber particles typically have a core formed of a first polymeric material and a shell formed of a second polymeric material. The core is typically a rubbery or elastomeric material and the shell is a non-elastomeric material. The core is often butadiene and/or styrene while the shell is often a (meth)acrylate copolymer. In the case of the second core-shell rubber particles, the (meth)acrylate copolymer shell is free or substantially free (e.g., no greater than 0.05, no greater than 0.01, no greater than 0.005, or no greater than 0.001 weight percent) of monomeric units derived from glycidyl (meth)acrylate.

Like the first core-shell rubber particles described above, the second core-shell rubber particles typically have an average particle diameter that is no greater than 1,000 nanometers, no greater than 500 nanometers, no greater than 400 nanometers, no greater than 300 nanometers, no greater than 200 nanometers, no greater than 100 nanometers, or no greater than 50 nanometers and at least 10 nanometers, at least 20 nanometers, at least 30 nanometers, at least 40 nanometers, or at least 50 nanometers. For example, the first core-shell rubber particles can be in a range of 10 to 1000 nanometers, 20 to 500 nanometers, 20 to 300 nanometers, 50 to 300 nanometers, or 100 to 300 nanometers. The average particles size can be determined using electron micrographic methodology.

Some commercially available second core-shell rubber particles are available from Kaneka (Belgium) as a dispersion in an epoxy resin such as bisphenol A epoxy resin or bisphenol F epoxy resin. Suitable commercially available second core-shell rubber particles include, but are not limited to, those listed in Table 2 from Kaneka (Belgium) that are dispersed in epoxy resin.

**Table 2: Example Second Core-Shell Rubber Particles in an epoxy resin**

| **Trade Designation** | **Rubber Core Composition** | **Epoxy Resin Dispersant** | **EEW (g/equiv)** | **Wt% CSR particles** | **Size (nm)** |
|---|---|---|---|---|---|
| KANE ACE MX-257 | Polybutadiene | Bisphenol A epoxy **resin** | 297 | 37 | 200 |
| KANE ACE MX-267 | Polybutadiene | Bisphenol F epoxy resin | 269 | 37 | 200 |
| KANE ACE MX-217 | Polybutadiene | Epoxidized novolac resin | 231 | 25 | 200 |

Other commercially available second core-shell rubber particles are available in the form of a powder. These powders can be dispersed in an epoxy resin, in an organic solvent, or in a first curing agent. Example second core-shell rubber particles are available from Kaneka (Belgium) under the trade designation KANE ACE. Some of these particles are methyl methacrylate/butadiene/styrene copolymers such as KANE ACE B-22, B-51, B-56, B-522, B-564, B-626, B-631, B-636, and B637. Other particles are (meth)acrylic copolymers such as KANE ACE FM-40, FM-41, FM-60, and FM-80. Still other particles include KANE ACE M-300, M-511, M-731, M-732, M-734, M-211, M-400, M-570, and ECO-100.

Other suitable second core-shell rubber particles are commercially available in the form of a powder under the trade designation PARALOID from Dow Chemical. These include PARALOID EXL-2690, EXL-2691J, EXL-3300, EXL-3330, EXL-3361, EXL3691J, KM-330, KM-334, KM-377, KM-390, KM-5000, KM-5450, KM-X100 PRO, TMS-2670J, 215 10-XP, 21521-XP, and 21523-XP.

Still other second core-shell rubber particles are commercially available from Mitsubishi under the trade designation METABLEN. Some of these have a polybutadiene rubber core such as METABLEN C-223A, C-215A, C-201A, C-140A, E-860A, E-870A, and E-875A. Others have an acrylic rubber core such as METABLEN W-300A, W-450A, W-600A, and W-377. Still others have a silicone-acrylic composite rubber core such as METABLEN S-2001, S-2006, S-2501, S-2030, S-2100, SRK200A, SX-006, and SX-0005.

Yet other second core-shell rubber particles are commercially available from Arkema under the trade designation CLEARSTRENGTH such CLEARSTRENGTH XT 100, 140, 223, 303H, 320, 350, 859, E920, E922, E950, E952, and W300.

Still more second core-shell rubber particles are commercially available from Shandong Rike Chemical such as RK-57, RK-56, RK-852G, and RK-852H. These all have a rubber core that are (meth)acrylate/butadiene/styrene copolymers.

The second core-shell rubber particles are used in combination with the first CSR particle-polyamine adduct to give the desired balance of rheological and physical properties within the first part composition. If there is too much of the second core-shell rubber particle relative to the amount of the first CSR particle-polyamine adduct, the impact resistance of the cured composition may be insufficient. This may be due to the lack of functional groups on the second core-shell rubber particles that can be tied into the polymeric matrix of the cured composition. Additionally, if the amount of the second core-shell rubber particle is too high, the viscosity of the first part may be too high to mix well when combined with the second part. Good mixing of the first and second parts is needed to achieve desirable adhesive properties. Preferably, the viscosity of the first part is close to the viscosity of the second part for good mixing of the two parts.

If there is too little of the second core-shell rubber particles, the plot of stress (MPa) versus viscosity (Pa-s) for the first part tends to be relatively flat (almost horizontal) with the viscosity being too low. If there is too much of the second core-shell rubber particles, however, the plot of stress (MPa) versus viscosity (Pa-s) for the first part tends to be too sharp (almost vertical) with the viscosity being too high. Neither extreme is well suited for good mixing of the first part with the second part. With an appropriate balance of the first CSR particle-polyamine adduct to the second core-shell rubber particles, curable compositions can be prepared that do not sag when deposited on a surface (particularly vertical or near vertical surfaces) and that result in a cured composition with good adhesive properties due at least in part to good mixing of the first part with the second part.

Typically, the first reaction mixture used to form the first part composition as well as the first part composition itself contains 1 to 12 weight percent second core-shell rubber particles based on a total weight of the first part composition. The amount can be at least 1, at least 2, at least 3, at least 4, or at least 5 weight percent and up to 12, up to 11, up to 10, up to 9, up to 8, up to 7, up to 6, or up to 5 weight percent. The range can be, for example, from 2 to 12, 2 to 10, or 3 to 10 weight percent based on the total weight of the first part.

### Optional Curing Catalyst

The first part composition can optionally further include a curing catalyst, which can also be called an accelerator. Examples of curing catalysts include phenols substituted with tertiary amino groups, bis-substituted urea compounds, sulfonic acid compounds or salts thereof, imidazoles or salts thereof, imidazolines or salts thereof, and Lewis acids. These compounds often accelerate reaction of any of the curing agents included in the first part composition that have - NHR¹ groups with the second epoxy resin in the second part composition.

Some curing catalysts are phenols substituted with tertiary amino groups and can be of Formula (II).

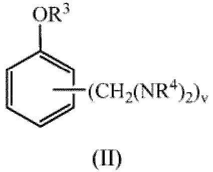

In Formula (II), group R³ is hydrogen or alkyl and each group R⁴ is independently an alkyl. The variable v is an integer equal to 2 or 3. Suitable alkyl groups for R⁴ and R³ often have 1 to 12 carbon atoms, 1 to 8 carbon atoms, 1 to 6 carbon atoms, or 1 to 4 carbon atoms. One exemplary secondary curative of Formula (V) is tris-2,4,6-(dimethylaminomethyl)phenol (i.e., tris(dimethylaminomethyl)phenol) that is commercially available under the trade designation ANCAMINE K54 from Air Products and Chemicals, Inc. (Allentown, PA, USA) and under the trade designation VERSAMID EH 30 from Gabriel Performance Products (Akron, OH, USA).

Other suitable curing catalysts are substituted ureas such as, for example, bis-substituted ureas. Examples include, but are not limited to, 4,4'-methylene bis(phenyl dimethyl) urea, toluene diisocyanate urea, 3-(4-chlorophenyl)-1,1-dimethylurea, and various compounds that are commercially available from CVC Thermoset Specialties under the trade designation OMICURE, (e.g., OMICURE U-35 (which is a cycloaliphatic bisurea), U-52, and U-52M).

Yet other curing catalysts are various sulfonic acidic compounds and salts thereof, such as those commercially available under the trade designation NACURE from King Industries, Inc. (Norwalk, CT, USA).

Still other curing catalysts are imidazoles or salts thereof or imidazolines or salts thereof. A first type of these compounds can react with an epoxy resin at room temperature. A second type of these compounds can react with the epoxy resin after being heated above their melting point (e.g., above 150 °C, above 170 °C, or above 200 °C). The second type of compounds can be referred to as "latent curatives" or "blocked curatives."

The first type of imidazole compounds (i.e., those that can react below their melting point) are often substituted at the I-position or the 2-position of the imidazole ring. In epoxy systems, this type of imidazole compound can be used as accelerators or catalysts for other curing agents and can also act as curing catalysts for epoxy resins. Examples of those used as catalysts or accelerators include: 2-methyl-imidazole, 2-ethyl-4-methyl imidazole. 2-phenyl imidazole, 2-phenyl-4-methyl imidazole, 1,2-dimethylimidazole, 2-heptadecyl imidazole, 1-benzyl-2-methyl imidazole, 1-benzyl-2-phenyl-imidazole, and 2-phenyl-4,5-dihydroxymethyl imidazole (commercially available from Air Products and Chemicals Inc., under the trade designation CUREZOL 2PZ-S).

The second type of imidazole compounds (i.e., those that can react above their melting point) are commercially available from Air Products and Chemicals Inc., under the trade designation CUREZOL 2MA-AZINE (which is 2,4-diamino-6(2'-methylimidazoleyl-(1'))ethyl-s-triazine), and CUREZOL 2MA-OK (which is 2,4-diamino-6(2'-methylimidazolyl-(1')(ethyl-s-triazine isocyanurate adduct))), and under the trade designation ARADUR 3123, which is 1-((2-methyl-1H-imidazol-1-yl)methyl)naphthalen-2-ol from Huntsman Corporation. Other imidazole compounds are metal imidazole salts such as those described in U.S. Patent No. 4,948,449 (Tarbutton et al.).

Further compounds suitable for use as curing catalysts for epoxy resins are Lewis acids. Example Lewis acids include, but are not limited to, boron trifluoride (BF₃), boron trichloride (BCl₃), zinc chloride (ZnCl₂), stannic chloride (SnCl₄), antimony pentachloride (SbCl₅), antimony pentafluoride (SbF₃), ferric chloride (FeCl₃), aluminum trichloride (AlCl₃), arsenic pentafluoride (AsF₅), calcium nitrate (Ca(NO₃)₂), calcium triflate (Ca(CF₃SO₃)₂), and phosphorous pentafluoride (PF₅). Due to their high reactivity, the Lewis acids are often complexed with a nitrogen-containing compound and/or with a hydroxy-containing compound. The molar ratio of the Lewis acid to the complexing agent is typically about 1:1 but can be higher depending on the specific Lewis acid and the selected complexing agent. Methods of preparing the Lewis acid complexes are described, for example, in U.S. Patent Nos. 3,565,861 (White et al.), 4,503,161 (Korbel et al.), 4,503,211 (Robins), and 5,731,369 (Mahoney).

In some embodiments, the curing catalyst is a mixture of mixture of phenols substituted with tertiary amino groups as in Formula (II) above and a Lewis acid.

The amount of the curing catalyst can be in a range of 0 to 10 weight percent based on the total weight of the first part composition. If present, the amount is often at least 0.1 weight percent, at least 0.2 weight percent, at least 0.3 weight percent, at least 0.5 weight percent, at least 1 weight percent, at least 1.5 weight percent, or at least 2 weight percent and up to 10 weight percent, up to 8 weight percent, up to 6 weight percent, up to 5 weight percent, or up to 4 weight percent.

### Optional inorganic fillers including thixotropic agents

The first part can optionally include an inorganic filler. More than one inorganic filler can be used, if desired, and any known inorganic fillers may be used. The inorganic fillers can be added to provide various properties to the final cured composition (e.g., strength), to alter the appearance of the final cured composition, or to alter the flow properties (e.g., thixotropic agents) of the first part and/or the curable composition.

The inorganic filler can have any desired form such as particles or fibers. The particles can be spherical, plate-like, acicular, or irregular. The inorganic filler can have any desired dimension. In some applications, the inorganic filler includes glass beads to help control the thickness of the curable composition and the resulting cured composition.

The inorganic fillers can be metals, metal oxides, metal hydroxides, metal oxyhydroxides, metal silicates, metal borides, metal carbides, metal nitrides, and the like. Some inorganic fillers are glass (e.g., glass beads including hollow glass beads or glass fibers) or ceramic materials such as, for example, aluminum powder, silicon oxide (e.g., fused or fumed silica), aluminum oxide (e.g., alumina), aluminum trihydroxide (ATH), boron nitride, silicon carbide, beryllium oxide, talc, marble powder, chalk, sand, mica powder, clays (e.g., montmorillonite, bentonite, or halloysite), slate powder, or zircon. Some inorganic fillers are metals such as copper, aluminum, nickel, chromium, steel, or various alloys.

In some embodiments, the inorganic filler is selected to function as a flow control agent or thickener that can provide the desired rheological characteristics to the composition. The optional inorganic filler is often selected to be a thixotropic agent. Silica is an example thixotropic agent and can be added to provide shear thinning. Silica has the effect of lowering the viscosity of the curable composition when force (shear) is applied. When no force (shear) is applied, however, the viscosity seems higher. That is, the shear viscosity is lower than the resting viscosity, The silica typically has a longest average dimension that is less than 500 nanometers, less than 400 nanometers, less than 300 nanometers, less than 200 nanometers, less than 100 nanometers, or less than 50 nanometers. The silica particles often have a longest average dimension that is at least 5 nanometers, at least 10 nanometers, at least 20 nanometers, or at least 50 nanometers. In some embodiments, the silica particles are fumed silica such as treated fumed silica, available under the trade designation CAB-O-SIL TS 720, and untreated fumed silica available under the trade designation CAB-O-SIL M5, from Cabot Corporation (Alpharetta, GA, USA). In other embodiments, the silica particles are non-aggregated nanoparticles.

To facilitate dispersion and increase inorganic filler loading, in some embodiments, the inorganic fillers may be surface-treated or coated. Generally, any known surface treatments and coatings may be suitable, including those based on silane, titanate, zirconate, aluminate, and organic acid chemistries. In some embodiments, the inorganic filler can be particles that are surface modified with an organic silane. For powder handling purposes, many fillers are available as polycrystalline agglomerates or aggregates with or without binder. In some embodiments, the inorganic fillers may include mixtures of particles and agglomerates of various size and mixtures.

While the optional inorganic filler can be in the first part, in the second part, or in both the first part and the second part compositions, it is often added only or primarily to the first part composition. The amount of the optional inorganic filler in the first part is often in a range of 0 to 15 weight percent based on a total weight of the first part. The amount can be at least 0.5, at least 1, at least 2, at least 3, at least 5. or at least 10 weight percent and up to 15, up to 12, up to 10, up to 9, up to 8, up to 7, up to 6, up to 5, up to 4, up to 3, or up to 2 weight percent based on the total weight of the first part.

### Overall first part composition

The first part composition is usually prepared from a first reaction mixture. All the components can be present initially or a premix can be prepared from a portion of the components. For example, a premix may be used to form both the first epoxy resin-polyamine adduct and the first CSR particle-polyamine adduct before adding the other components including more polyamine. The adducts can be formed, for example, using a first polyamine or a first polyamine mixture and then more polyamine can be added after formation of the adducts. If desired, the polyamine added after formation of the adducts may be the same as or different than the polyamine or polyamine mixture used to form the adduct.

Regardless of whether a premix is formed, the first part is a reaction product of a reaction mixture that contains (1) 55 to 80 weight percent of a polyamine based on a total weight of the first part, the polyamine having at least two -NHR¹ groups wherein each R¹ is independently hydrogen, alkyl, aryl, aralkyl, or alkaryl, 2) 5 to 25 weight percent of a first epoxy resin based on the total weight of the first part, the first epoxy resin being reactive with the polyamine, 3) 2 to 12 weight percent of a first core-shell rubber particle based on the total weight of the first part, the first core-shell rubber particle being dispersed in the first part and having a surface modified epoxy-containing group that is reactive with the polyamine, and 4) 1 to 12 weight percent of a second core-shell rubber particle based on the total weight of the first part, the second-core shell rubber particle being dispersed in the first part and free of the surface modified epoxy-containing group. Other optional components can be in the first part such as 0 to 10 weight percent of a curing catalyst and/or 0 to 15 weight percent of an inorganic filler based on a total weight of the first part.

In some embodiments, the first reaction mixture contains (1) 55 to 75 weight percent of the polyamine, 2) 10 to 25 weight percent of the first epoxy resin, 3) 3 to 12 weight percent of the first core-shell rubber particle, and 4) 2 to 12 weight percent of the second core-shell rubber particle based on the total weight of the first part. In other embodiments, the first reaction mixture contains (1) 60 to 75 weight percent of the polyamine, 2) 5 to 20 weight percent of the first epoxy resin, 3) 2 to 10 weight percent of the first core-shell rubber particle, and 4) 2 to 10 weight percent of the second core-shell rubber particle based on the total weight of the first part. In still other embodiments, the first reaction mixture contains (1) 60 to 70 weight percent of the polyamine, 2) 10 to 20 weight percent of the first epoxy resin, 3) 3 to 10 weight percent of a first core-shell rubber particle, and 4) 3 to 10 weight percent of a second core-shell rubber particle based on the total weight of the first part. For any of these embodiments, the reaction mixture can further include other optional components such as a curing catalyst in a range of 0 to 10 weight percent and/or an inorganic filler in an amount of 0 to 15 weight percent based on a total weight of the first part.

The first part composition (the reaction product of the first reaction mixture) typically contains 1) 30 to 65 weight percent polyamine, 2) 20 to 55 weight first epoxy resin-polyamine adduct, 3) 2 to 12 weight percent first CSR particle-polyamine adduct, and 4) 1 to 12 weight percent second CSR particle based on the total weight of the first part. In some embodiments, the first part composition contains 1) 30 to 60 weight percent polyamine, 2) 22 to 55 weight first epoxy resin-polyamine adduct, 3) 2 to 10 weight percent first CSR particle-polyamine adduct, and 4) 2 to 12 weight percent second CSR particle based on the total weight of the first part. In still other embodiments, the first part composition contains 1) 35 to 60 weight percent polyamine, 2) 20 to 50 weight first epoxy resin-polyamine adduct, 3) 3 to 12 weight percent first CSR particle-polyamine adduct, and 4) 2 to 10 weight percent second CSR particle based on the total weight of the first part. In yet other embodiments, the first part composition contains 1) 40 to 60 weight percent polyamine, 2) 20 to 45 weight first epoxy resin-polyamine adduct, 3) 3 to 10 weight percent first CSR particle-polyamine adduct, and 4) 3 to 10 weight percent second CSR particle based on the total weight of the first part. For any of these embodiments, the reaction mixture can further include other optional components such as a curing catalyst in a range of 0 to 10 weight percent and/or an inorganic filler in an amount of 0 to 15 weight percent based on a total weight of the first part.

The first part typically has an amine hydrogen equivalent weight (AHEW) in a range of 50 to 200 grams per equivalent. The AHEW is often at least 50, at least 60, at least 70, at least 80, at least 90, or at least 100 grams/equivalent and up to 200, up to 180, up to 160, up to 150, up to 140, or up to 120 grams/equivalent.

### Second Part Composition

The second part composition includes a second epoxy resin and a third core-shell rubber particle that has surface modified epoxy-containing groups and/or fourth core-shell rubber particles that are free of surface modified epoxy-containing groups (or any groups that can react with an epoxy resin or a polyamine). Other components such as fillers (e.g., inorganic fillers), and the like can be optionally included in the second part composition.

### Second epoxy resin

Any suitable epoxy resin can be used in the second part composition. The epoxy resin typically has at least two glycidyl groups. The second epoxy resin can be the same as or different than the first epoxy resin used to form the two adducts in the first reaction mixture.

Suitable epoxy resins may include aromatic polyepoxide resins (e.g., a chain-extended diepoxide or novolac epoxy resin having at least two epoxide groups), aromatic monomeric diepoxides, aliphatic polyepoxide, or aliphatic monomeric diepoxides. The aromatic polyepoxide or aromatic monomeric diepoxide typically contains at least one (e.g., in a range of 1 to 6, 1 to 4, 2 to 6, or 2 to 4) aromatic ring that is optionally substituted by a halogen (e.g., fluoro, chloro, bromo, iodo), alkyl having 1 to 4 carbon atoms (e.g., methyl or ethyl), or hydroxyalkyl having 1 to 4 carbon atoms (e.g., hydroxymethyl). For epoxy resins containing two or more aromatic rings, the rings may be connected, for example, by a branched or straight-chain alkylene group having 1 to 4 carbon atoms that may optionally be substituted with a halogen (e.g., fluoro, chloro, bromo, or iodo).

Examples of aromatic epoxy resins may include novolac epoxy resins (e.g., phenol novolacs, ortho-, meta-, or epoxy resin para-cresol novolacs, or combinations thereof), bisphenol epoxy resins (e.g., bisphenol A, bisphenol F, halogenated bisphenol epoxies, and combinations thereof), resorcinol epoxy resins, tetrakis phenylolethane epoxy resins, and combinations of any of these. Useful epoxy compounds include diglycidyl ethers of difunctional phenolic compounds (e.g., p,p'-dihydroxydibenzyl, p,p'-dihydroxydiphenyl, p,p'-dihydroxyphenyl sulfone, p,p'dihydroxybenzophenone, 2,2'-dihydroxy-1,1-dinaphthylmethane, and the 2,2', 2,3'. 2,4', 3,3', 3,4', and 4,4' isomers of dihydroxydiphenylmethane, dihydroxydiphenyldimethylmethane, dihydroxydiphenylethylmethylmethane, dihydroxydiphenylmethylpropylmethane, dihydroxydiphenylethylphenylmethane, dihydroxydiphenylpropylphenylmethane, dihydroxydiphenylbutylphenylmethane, dihydroxydiphenyltolylethane, dihydroxydiphenyltolymethylmethane, dihydroxydiphenyldicyclohexylmethane, and dihydroxydiphenylcyclohexane). Another useful epoxy compound is triglycidyl para-aminophenol.

In some embodiments, the epoxy resin includes a bisphenol diglycidyl ether, wherein the bisphenol (i.e., -O-C₆H₅-CH₂-C₆H₅-O- group) may be unsubstituted (e.g., bisphenol F), or wherein either of the phenyl rings or the methylene group may be substituted by one or more halogens (e.g., fluoro, chloro, bromo, iodo), methyl groups, trifluoromethyl groups, or hydroxymethyl groups.

Examples of aromatic monomeric diepoxides useful in the curable component as the epoxy resin include, but are not limited to, the diglycidyl ether of bisphenol A, the diglycidyl ether of bisphenol F, and mixtures thereof. Bisphenol epoxy resins, for example, may be chain extended to have any desirable epoxy equivalent weight. Chain extending epoxy resins can be carried out by reacting a monomeric diepoxide, for example, with a bisphenol in the presence of a catalyst to make a linear polymer.

The aromatic epoxy resin (e.g., either a bisphenol epoxy resin or a novolac epoxy resin) often has an epoxy equivalent weight of at least 150, 170, 200, or 225 grams per equivalent. The epoxy equivalent weight can be up to 2000, 1500, or 1000 grams per equivalent. In some embodiments, the aromatic epoxy resin may have an epoxy equivalent weight in a range of 150 to 2000, 150 to 1000, or 170 to 900 grams per equivalent. For example, the epoxy resin can have an epoxy equivalent weight in a range of 150 to 450, 150 to 350, or 150 to 300 grams per equivalent. Epoxy equivalent weights may be selected, for example, so that the epoxy resin may be used as a liquid or solid, as desired.

In some embodiments, in addition or as an alternative to aromatic epoxy resins, the epoxy resins may include one or more non-aromatic epoxy resins. In some cases, non-aromatic (i.e., aliphatic) epoxy resins can be useful as reactive diluents that may help control the flow characteristics of the compositions. Non-aromatic epoxy resins useful in the curable compositions include, for example, a branched or straight-chain alkylene group having 1 to 20 carbon atoms optionally interrupted with at least one -O- and optionally substituted by hydroxyl. In some embodiments, the non-aromatic epoxy can include a poly(oxyalkylene) group having a plurality (q) of oxyalkylene groups, -OR⁵-, wherein each R⁵ is independently an alkylene having 2 to 5 carbon atoms. In some embodiments, R⁵ is an alkylene with 2 to 4 carbon atoms, q is 2 to about 6 (or even higher), 2 to 5, 2 to 4, or 2 to 3. To become crosslinked into a network, useful non-aromatic epoxy resins will typically have at least two epoxy end groups.

Examples of useful non-aromatic epoxy resins include glycidyl epoxy resins such as those based on diglycidyl ether compounds comprising one or more oxyalkylene units. Examples of these epoxy resins include ethylene glycol diglycidyl ether, propylene glycol diglycidyl ether, diethylene glycol diglycidyl ether, dipropylene glycol diglycidyl ether, polyethylene glycol diglycidyl ether, polypropylene glycol diglycidyl ether, glycerol diglycidyl ether, glycerol triglycidyl ether, propanediol diglycidyl ether, butanediol diglycidyl ether, hexanediol diglycidyl ether, and tetraglycidyl methylene dianiline. Other useful non-aromatic epoxy resins include a diglycidyl ether of cyclohexane dimethanol, a diglycidyl ether of neopentyl glycol, a triglycidyl ether of trimethylolpropane, and a diglycidyl ether of 1,4-butanediol.

In some embodiments, the epoxy resins may be liquid at room temperature. Several suitable epoxy resins are commercially available. For example, several epoxy resins of various classes and epoxy equivalent weights are available from Dow Chemical Company (Midland, MI, USA), Hexion, Inc. (Columbus, OH, USA), Huntsman Advanced Materials (The Woodlands, TX, USA), CVC Specialty Chemicals Inc. (Akron, OH, USA and recently acquired by Emerald Performance Materials), and Nan Ya Plastics Corporation (Taipei City, Taiwan). Examples of commercially available glycidyl ethers include diglycidyl ethers of bisphenol A (e.g., those available under the trade designations "EPON" from Hexion Inc. (Columbus, OH, USA) (e.g., EPON 828, EPON 1001, EPON 1310. and EPON 1510), those available under the trade designation "D.E.R." from Dow Chemical Co. (e.g., D.E.R. 331, 332, and 334), those available under the trade designation "EPICLON" from Dainippon Ink and Chemicals, Inc. (e.g., EPICLON 840 and 850), and those available under the trade designation "YL-980" from Japan Epoxy Resins Co, Ltd.)): diglycidyl ethers of bisphenol F (e.g., those available under the trade designation "EPICLON" from Dainippon Ink and Chemicals, Inc. (e.g., EPICLON 830)); polyglycidyl ethers of novolac resins (e.g., novolac epoxy resins, such as those available under the trade designation "D.E.N." from Dow Chemical Co. (e.g., D.E.N. 425, 431, and 438)); and flame retardant epoxy resins (e.g., D.E.R. 580, a brominated bisphenol type epoxy resin available from Dow Chemical Co.). Examples of commercially available non-aromatic epoxy resins include the diglycidyl ether of cyclohexane dimethanol, available from Hexion Inc. (Columbus OH, USA) under the trade designation HELOXY MODIFIER 107.

The second part composition usually contains 75 to 99 weight percent second epoxy resin based on a total weight of the second part. The amount can be at least 75, at least 80, or at least 95 weight percent and up to 98, up to 95, up to 90, or up to 85 weight percent. The range can be, for example, from 75 to 95, 75 to 90, 75 to 85, 70 to 95 weight percent, 70 to 90 weight percent, 70 to 85 weight percent, or 70 to 80 weight percent based on the total weight of the second part.

### Third core-shell rubber particles and or fourth core-shell rubber particles

The second part composition typically includes CSR particles to further enhance the impact resistance of the cured composition. The CSR particles can be third core-shell rubber particles that have a surface modified epoxy-containing group and/or fourth core-shell rubber particles that are free of a surface modified epoxy-containing group or any group that can react with an epoxy resin or a polyamine.

Suitable third CSR particles for use in the second part composition are that same as those described above for use as the first core-shell rubber particles in the first part composition. The third CSR particles can get bonded into the polymeric matrix for the cured composition. In some instances, third CSR particles are selected that are dispersed in an epoxy resin having more than two glycidyl group per compound to enhance the crosslinking of the cured composition. Examples of such third CSR particles include, but are not limited to, KANE ACE MX-416 with tetraglycidyl methylene dianiline as the dispersant and KANE ACE MX-451 with triglycidyl para-aminophenol as the dispersant.

Suitable fourth CSR particles for use in the second part composition are the same as those described above for use as the second core-shell rubber particles in the first part composition. Unlike the second CSR particles included in the first part, however, the fourth CSR particles in the second part do not alter of rheological properties as significantly.

The third CSR particles can be present in an amount ranging from 0 to 25 weight percent based on the total weight of the second part composition. The amount can be at least 1, at least 2, at least 5, at least 10, at least 12, or at least 15 weight percent and up to 25, up to 22, up to 20, or up to 15 weight percent. The amount can range, for example, from 2 to 25, 5 to 25, 5 to 20, 10 to 25, or 12 to 25 weight percent based on the total weight of the second part composition.

The fourth CSR particles can be present in an amount ranging from 0 to 15 weight percent based on a total weight of the second part. The amount can be at least 1, at least 2, at least 3, or at least 5 weight percent and up to 15, up to 12, up to 10, up to 8, or up to 5 weight percent. The amount can range, for example, from 0 to 12, 1 to 12, 0 to 10, or 1 to 10 weight percent based on the total weight of the second part composition.

The second part composition usually contains 1 to 25 weight percent third CSR particles and/or fourth CSR particles. The amount can be at least 1, at least 2, at least 5, at least 10, at least 12, or at least 15 weight percent and up to 25, up to 22, up to 20, or up to 15 weight percent. The amount can range, for example, from 2 to 25, 5 to 25, 5 to 20, 10 to 25, or 12 to 25 weight percent based on the total weight of the second part composition. In many embodiments of the second part composition, the core-shell particles are mainly or only the third core-shell rubber particles. Some compositions contain 1 to 25 weight percent third CSR particles and 0 to 15 weight percent fourth CSR particles with the total being no more than about 25 weight percent.

### Optional inorganic fillers

The second part composition can optionally include the same type of inorganic fillers that optionally can be added to the first part. In some embodiments, if an inorganic filler is used in the second part, it is selected to be a thixotropic agent. The amount of optional inorganic filler is often in a range of 0 to 10 weight percent based on the total weight of the second part. The amount can be at least 0.1, at least 0.5, at least 1, at least 2, or at least 3 weight percent and up to 10, up to 8, up to 6, or up to 5 weight percent. As stated above, if present, the inorganic filler often if predominately or only present in the first part composition. The total curable composition can contain 0 to 20 weight percent inorganic filler (including any thixotropic filler). The amount of the inorganic filler can be at least 0.1, at least 0.5, at least 1, at least 2, at least 5, or at least 10 weight percent and up to 20, up to 15, or up to 10 weight percent based on a total weight of the curable composition.

### Overall second part composition

The second part composition usually contains 75 to 99 weight percent epoxy resin and 1 to 25 weight percent third CSR particles and/or fourth CSR particles based on a total weight of the second part. In some embodiments, the second part contains 75 to 95 weight percent epoxy resin, 5 to 25 weight percent third and/or fourth CSR particles, 75 to 90 weight percent epoxy resin and 10 to 25 weight percent third and/or fourth CSR particles, 80 to 95 weight percent epoxy resin and 5 to 20 weight percent third and/or fourth CSR particles, or 80 to 90 weight percent epoxy resin and 10 to 20 weight percent third and/or fourth CSR particles. Any of these second part compositions can contain 0 to 10 weight percent inorganic filler, if desired.

The amount of the second part composition is selected relative to the amount of the first part composition so that the ratio of amine hydrogen equivalent weight to epoxy equivalent weight is in a range of 2:1 to 1:2. This ratio is often selected to be in a range of 1.8:1 to 1:1.8. in a range of 1.5:1 to 1:1.5, in a range of 1.3:1 to 1:1.3, in a range of 1.2:1 to 1:1.2, in a range of 1.1:1 to 1:1.1, or equal to 1:1.

### Other optional components in the curable composition

The curable composition, which is the combination of the first part composition and the second part composition, can further include other optional components. These optional components can be in the first part composition, in the second part composition, or in both. Examples of further optional components include organic solvents, antioxidants/stabilizers, colorants, thermal degradation stabilizers, light stabilizers, tackifiers, flow agents, bodying agents, flatting agents, blowing agents, fungicides, bactericides, surfactants, plasticizers, organic fillers, pigments, flame retardants, dispersants, adhesion promoters, and other additives known to those skilled in the art can be added. These additives, if present, are added in an amount effective for their intended purpose. Other materials may also be added such as solvents, surfactants, adhesion promoters, heat stabilizers, and light stabilizers,

Suitable organic fillers include, for example, carbon block, coal tar, polymeric fibers, carbon fibers, polymeric beads, and the like.

In some embodiments, the curable composition may include dispersants that can help stabilize any optional inorganic or organic filler that is in the curable composition. That is, without dispersant, the filler may aggregate, thus adversely affecting the benefit of the inorganic filler in the cured composition. Suitable dispersants may depend on the specific identity and surface chemistry of the filler. In some embodiments, suitable dispersants may include at least a binding group and a compatibilizing agent. The binding group may be ionically bonded to the surface of the filler. Examples of binding groups for inorganic fillers (e.g., metal oxide fillers) include phosphoric acid, phosphonic acid, sulfonic acid, carboxylic acid, and amine. The compatibilizing agent may be selected to be miscible with the curable components. Useful compatibilizing agents may include polyalkylene oxides (e.g., polypropylene oxide, polyethylene oxide), polycaprolactones, and combinations thereof. Commercially available examples include BYK W-9010 (BYK Additives and Instruments), BYK W-9012 (BYK Additives and Instruments), DISBERBYK 180 (BYK Additives and Instruments), and SOLPLUS D510 (Lubrizol Corporation). In some embodiments, the dispersant may be pre-mixed with the filler prior to combining the filler with the curable components. Such pre-mixing may facilitate the filled systems behaving like Newtonian fluids or enabling shear-thinning effects behavior.

The curable composition can include an adhesion promoter. Any known adhesion promoter can be used. Exemplary promoters include, but are not limited to, various silane compounds such as those having amino groups or glycidyl groups that can react with one or more components in the curable composition. One such silane compound is a glycidoxypropyltrimethoxysilane that is commercially available under the trade designation DOWSIL Z-6040 Silane from Dow Coming, Midland, MI. Other exemplary adhesive promoters include various chelating agents such as those described in U.S. Patent No. 6,632,872 (Pellerite et al.) and various chelate -modified epoxy resins such as those available from Adeka Corporation in Tokyo, Japan.

The total amount of such additives is typically in a range of 0 to 20 weight percent based on a total weight of the curable composition. The amount is usually less than 20, less than 15, less than 10, less than 5 weight percent, or less than 1 weight percent based on the total weight of the curable composition.

### Cured Composition

The curable composition, which includes both the first part composition and the second part composition, is mixed, and reacted to form the cured composition. That is, the cured composition is a reaction product of the first part and second part compositions. The first curing agent, the second curing agent, and the third curing agent in the first part react with the second epoxy resin in the second part.

The first part and second part compositions are typically mixed at a temperature no greater than 40 degrees Celsius such as at or near room temperature (e.g., 20 to 25 degrees Celsius). Optional additional parts can be mixed with the first part and the second part. Any suitable method can be used to combine the various parts of the curable compositions.

The first and second parts can be mixed manually or with any known mechanical mixing and/or dispensing device. For example, the first part can be in a first chamber and the second part can be in a second chamber of a multi-chambered mixing and/or dispensing device. In certain embodiments, the multi-chambered mixing and/or dispensing device is a dual barreled syringe. Optionally, the dual barreled syringe may include or be connected to a static mixing device to mix the contents of each barrel upon delivery from the syringe and prior to discharging the cured composition (i.e., mixed composition) on the location of interest. While some curing may occur within the mixing device, the reaction mixture is typically still fluid when discharged from the mixing device. Although not required, the viscosity of the first part and the second part are often selected to be similar so that the part can be effectively mixed.

Further, it is desirable that the curable composition is sufficiently thick that it does not run or sag when applied to a substrate, particularly to vertical or near vertical substrates. The method for measuring sag is described in the examples below. That is, the curable composition stays close to where it is applied even when applied to a vertical surface. The selection of the type of core-shell rubber particles influences the amount of sag that occurs. If the core-shell rubber particles are only or predominately first core-shell rubber particles (and optionally third core-shell rubber particles) with their surfaces modified with epoxy groups, the amount of sag is quite low. However, having too much of the first (and optionally third) core-shell rubber particles in the curable composition can lead to decreased overlap shear strength for the cured composition. On the other hand, using only or predominately the second type of core-shell rubber particles (and optionally fourth core-shell rubber particles) in the curable composition, the sag is not acceptable, but the overlap shear strength is improved. Thus, an acceptable balance of sag and overlap shear strength can be obtained by having a mixture of the first core-shell rubber particles (plus optional third CSR particles in the second part) and the second core-shell rubber particles (plus optional fourth CSR particles in the fourth part). This balance is typically achieved when there is a mixture of the first core-shell rubber particles and second core-shell rubber particles in the first part composition. For example, this balance can be achieved when the first part composition contains 2 to 12 weight percent first core-shell rubber particles and 2 to 12 weight percent second core-shell rubber particles based on a total weight of the first part composition.

The amount of the second part composition that is mixed with the first part composition is often in weight ratio of 1:1 to 4:1. The ratio can be in a range at least 1:1, at least 1.5:1, at least 2:1, or at least 2.5:1 and up to 4:1, up to 3.5:1, or up to 3:1.

### Articles and method of making articles

An article is provided that includes a cured composition positioned adjacent to a first substate. The cured composition is the reaction product of the curable composition having a first part and a second part as described above. In some embodiments, the article further comprises a second substrate and the cured composition is positioned between the first substrate and the second substrate. The cured composition bonds the first substrate to the second substrate.

A method of making an article is provided. The method includes providing a curable composition having a first part and a second part as described above, preparing a mixture by combining the first part and the second part, positioning the mixture on a first substrate and optionally positioning a second substrate adjacent to the mixture opposite the first substrate, and then curing the mixture. The curing step is described above.

The curable composition mixture can be discharged on any suitable substrate surface. The substrate can be a metal, metal oxide, ceramic material, glass, polymeric material, or a composite material. In many embodiments, the substrate has an outer layer that is a metal oxide, ceramic material, or glass. Example substrates can be a metal (e.g., aluminum, steel, zinc, titanium, iron, chromium, nickel, and various alloys) or oxide thereof.

In some embodiments, the cured composition may function as a structural or semi-structural adhesive (i.e., the cured composition can bond a first substrate to a second substrate) after curing. Generally, the bond strength (e.g., peel strength, overlap shear strength, or impact strength) of a structural or semi-structural adhesive continues to build well after the initial cure time. Thus, an article is provided that comprises a first substrate, a second substrate and a cured composition disposed between and adhering (bonding) the first substrate to the second substrate, wherein the cured composition is the reaction product of the curable composition described above. The cured composition can bond the first substrate to the second substrate.

In other embodiments, the curable and cured composition may function as a coating. Thus, an article is provided that comprises a substrate (e.g., metal substrate with an outer surface of metal oxide) and a coating of the uncured, partially cured or fully cured curable composition on at least one surface thereof. If the substrate has two major surfaces, the coating can be coated on one or both major surfaces of the substrate. Other layers can be present such as, for example, bonding, tying, protective, and topcoat layers. The substrate is often a metal and the metal substrate can be, for example, at least one of the inner and outer surfaces of a pipe, vessel, conduit, rod, profile shaped article, sheet or tube.

Any suitable thickness of the cured composition may be present in the articles. In some embodiments, the curable compositions used to form the cured compositions have a thickness ranging from 5 microns to 10,000 microns, 25 micrometers to 10,000 micrometers, 100 micrometers to 5,000 micrometers, or 250 micrometers to 1,000 micrometers.

### Examples

Unless otherwise noted, all parts, percentages, ratios, etc. in the Examples and the rest of the specification are by weight. Unless otherwise indicated, all other reagents were obtained, or are available from fine chemical vendors such as Sigma-Aldrich Company, St. Louis, Missouri, or may be synthesized by known methods. Table 3 (below) lists materials used in the examples and their sources.

**TABLE 3. Materials List**

| DESIGNATION | DESCRIPTION | SOURCE |
|---|---|---|
| TTD | 4,7,10-Tnoxatridecane-1,13-diamme (TTD); Polyether amine-based curing agent with low viscosity and high reactivity obtained under the trade designation "BAXXODUR EC 130" | TCI America (Portland, OR, USA) |
| MX154 | Surface-functionalized (with epoxy groups) core-shell rubber (CSR) dispersed in an epoxy resin (bisphenol A epoxy) obtained under the trade designation "KANE ACE MX-154". The core-shell rubber is a polybutadiene rubber. The nominal epoxy equivalent weight is 301 grams/equivalent and the core-shell rubber content is 40±1 weight percent. | Kaneka Corporation (Minato City, Tokyo, Japan) |
| MX257 | Non-functionalized (not surface modified with epoxy groups) core-shell rubber (CSR) dispersed in epoxy resin (bisphenol A epoxy) obtained under the trade designation "KANE ACE MX-257". The core-shell rubber is a polybutadiene rubber. The nominal epoxy equivalent weight is 298 grams/equivalent and the core-shell rubber content is 37±1 weight percent. | Kaneka Corporation |
| MX416 | Surface-functionalized (with epoxy groups) core-shell rubber (CSR) dispersed in epoxy resin (multi-functional triglycidyl-*p*-aminophenol (TGPAP) epoxy) obtained under the trade designation "KANE ACE MX-416". The core-shell rubber is a polybutadiene rubber. The nominal epoxy equivalent weight is 148 grams/equivalent and the core-shell rubber content is 25±1 weight percent. | Kaneka Corporation |
| EPON828 | Bisphenol-A diglycidyl ether, having an epoxy equivalent weight of 185 to 192 Daltons, available under the trade designation "EPON RESIN 828" | Hexion Inc. (Columbus, OH) |
| POLYTHF170 | Polyetheramine (the polyether portion is poly(tetramethylene glycol-co-poly(propylene glycol): difunctional with a mixture of primary and secondary amino groups and with an average molecular weight of about 1,700 Daltons: obtained under the trade designation "JEFFAMINE THF-170" | Huntsman Corporation |
| NBDA | Norbornane diamine | Mitsui Chemicals America, Inc. (Rye Brook, NY) |
| K54 | Catalyst (tris-2,4,6-dimethylaminomethyl phenol) obtained under the trade designation "ANCAMINE K54" | Evonik Industries (Essen, Germany) |
| CAN | Accelerator; calcium nitrate tetrahydrate (Ca(NO₃)₂ *4H₂O) | VWR International. (Radnor. PA) |
| TS720 | Polydimethylsiloxane fumed silica that has been surfacetreated with polydimethylsiloxane (PDMS), obtained under the trade designation CAB-O-SIL TS-720 | Cabot Corporation, (Boston, MA) |

### Rheology Measurements

The rheological measurements of the premixes for the first part, the complete first part, and for the curable compositions were taken with a TA Discovery rheometer (TA Instruments, New Castle, DE), using a 25 mm stainless steel parallel plate geometry. For each measurement, about 0.5 milliliter (mL) of sample was loaded onto the bottom plate and the gap was set to 940 µm. Each sample was first conditioned at a temperature of 50 °C for 3 minutes, and then sheared at a constant rate of 1.0 sec⁻¹ for 30 seconds. Afterwards, the sample is subjected to a steady state shear ramp from 0.01 sec⁻¹ to 4 sec⁻¹ (first flow test) and the shear ramp is then reversed (second flow test, shear rate from 4 sec⁻¹ to 0.01 sec⁻¹). Shear rate, shear stress, and viscosity were probed simultaneously. Viscosities at different shear rates were reported from the second flow test.

The Thixotropic Index is defined as the viscosity at a shear rate of 0.01 sec⁻¹ divided by the viscosity at a shear rate of 1.0 sec⁻¹.

### Preparatory Examples 1-5 (Prem ix for First Part)

To make each composition in Table 2, CAN was first dissolved into TTD with the aid of mild heating (50 °C). MX257 and MX154 were weighed out according to the weight fractions in Table 2 and mixed using a DAC 400 FVZ SPEEDMIXER (FlackTek Inc., Landrum, SC) at 2,000 revolutions per minute (RPM) for 2 minutes. CAN/TTD solutions were further added into corresponding mixing cups and mixed at 2,000 RPM for another 2 minutes. After mixing, each mixture was placed into an oven held at a temperature of 65 °C for 110 minutes. They were then removed from the oven and allowed to cool to room temperature.

**TABLE 2A. Composition of Premixes (PE-1 to PE-5) for First Part**

| COMPONENT | COMPOSITION, weight percent of components | | | | |
|---|---|---|---|---|---|
| | PE-1 | PE-2 | PE-3 | PE-4 | PE-5 |
| MX257 | 55.4 | - | 41.6 | 27.7 | 13.8 |
| MX154 | - | 55.4 | 13.8 | 27.7 | 41.6 |
| TTD | 43.8 | 43.8 | 43.8 | 43.8 | 43.8 |
| CAN | 0.8 | 0.8 | 0.8 | 0.8 | 0.8 |

**Table 2B. Rheology of Premixes (PE-1 to PE-5) for First Part**

| RHEOLOGY MEASUREMENTS | COMPOSITION, weight percent of components | | | | |
|---|---|---|---|---|---|
| | PE-1 | PE-2 | PE-3 | PE-4 | PE-5 |
| Viscosity at 0.01 sec⁻¹, Pa·s | 193,285 | 45 | 66,427 | 22,175 | 1,066 |
| Viscosity at 0.01 sec⁻¹, Pa·s | 30,755 | 33 | 10,940 | 3,839 | 338 |
| Viscosity at 0.01 sec⁻¹, Pa·s | 4,328 | 27 | 1,749 | 732 | 137 |
| Thixotropic Index | 45 | 2 | 38 | 30 | 8 |

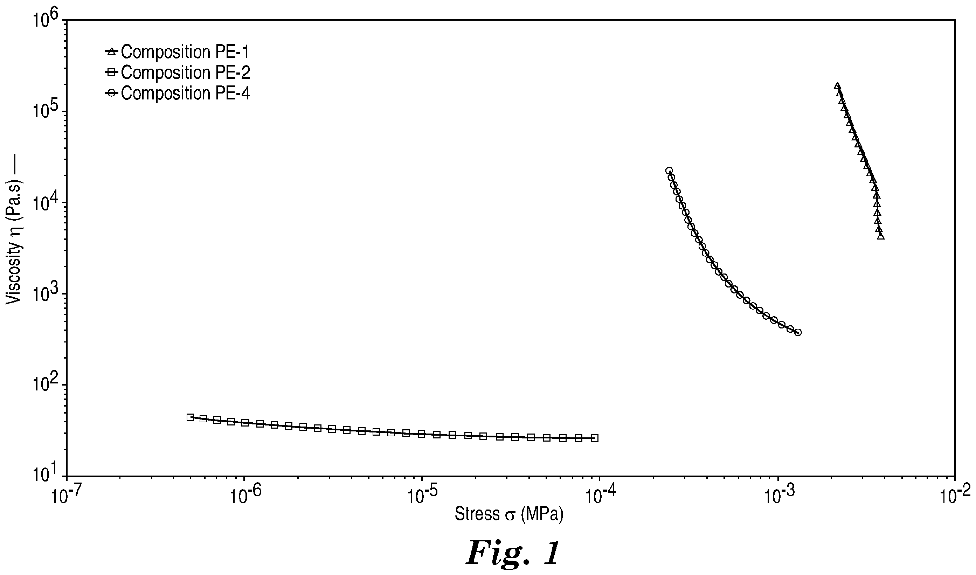

FIG. 1 is a plot of viscosity (Pa-s) versus stress (MPa) for premixes PE-1, PE-2, and PE-4. Premix PE-1 contained only the second CSR particles without a surface modifying epoxy group but not the first CSR particles that have a surface modifying epoxy group. The plot for PE-1 is almost vertical. PE-2 contained only the first CSR particles that have a surface modifying epoxy group but not the second CSR particles without the surface modifying epoxy group. The plot for PE-2 is almost horizontal. PE-4 contained both the first CSR particles and the second CSR particles. The plot for PE-4 indicates that this composition can be more easily adjusted than either PE-1 or PE-2 to obtain the desired rheological properties.

### Compositions A-E (First Part)

First part compositions were weighed out according to weight fractions listed in the Table 3 into appropriately sized DAC mixing cups (FlackTek Inc.). The components of Compositions A-E were mixed using a DAC 400 FVZ SPEEDMIXER. Each composition was first mixed at 2,000 rpm for 2 minutes. This mixing procedure was repeated for at least one other time until the mixture was homogeneous. TS720 was added last and mixed at 2,000 rpm for 2 minutes after all other components were fully mixed. All compositions A-E have an amine equivalent weight of 94 grams/equivalent.

**TABLE 3. First Part Compositions (A-E)**

| COMPONENT | COMPOSITION, weight percent of components | | | | |
|---|---|---|---|---|---|
| | A | B | C | D | E |
| PE-1 | 31.2 | | | | |
| PE-2 | | 31.2 | | | |
| PE-3 | | | 31.2 | | |
| PE-4 | | | | 31.2 | |
| PE-5 | | | | | 31.2 |
| NBDA | 32.5 | 32.5 | 32.5 | 32.5 | 32.5 |
| CAN | 0.5 | 0.5 | 0.5 | 0.5 | 0.5 |
| POLYTHF170 | 21.7 | 21.7 | 21.7 | 21.7 | 21.7 |
| K54 | 3.2 | 3.2 | 3.2 | 3.2 | 3.2 |
| TS720 | 10.9 | 10.9 | 10.9 | 10.9 | 10.9 |

### Composition F (Second Part)

A second part composition corresponding to the weight fractions listed in Table 4 was prepared by measuring the components into a DAC mixing cup. The components of Compositions F were speed mixed using a DAC 400 FVZ SPEEDMIXER at 2,000 RPM for 2 minutes. The cup was briefly checked, and the mixing process was repeated until the mixture was homogeneous. Composition F has an epoxy equivalent weight of 180 grams/equivalent.

**TABLE 4. Second Part Composition (F)**

| COMPONENT | COMPOSITION, weight percent of components |
|---|---|
| | F |
| EPON828 | 24.8 |
| MX257 | 24.8 |
| MX416 | 50.4 |

### Examples 1-2 and Comparative Examples 1-3 (Adhesive Compositions)

For the following Examples and Comparative Examples, 2 parts by weight of a second part composition and 1 part by weight of a first part composition were measured into DAC mixing cups, hand mixed for 1 minute, and speed mixed using a DAC 600.2 VAC-LR SPEEDMIXER (FlackTek Inc.) for 4 minutes under vacuum program (800 RPM, 20 sec, atm: 800 RPM, 40 sec, 500 mbar; 900 RPM, 120 sec, 50 mbar; 1000 rpm, 60 sec, 50 mbar) to form an adhesive composition. The ratio of amine equivalents to epoxy equivalents are all in range of 1.0 to 1.04.

Rheology measurements of the adhesive compositions were taken on a TA Discovery rheometer (TA Instruments, New Castle, DE), using a 25 mm stainless steel parallel plate geometry. For each measurement, about 0.5 milliliter (mL) of adhesive composition was loaded onto the bottom plate and the gap was set to 940 µm. Each sample was first conditioned at a temperature of 23 °C for 3 minutes, and then sheared at a constant rate of 1.0 sec⁻¹ for 30 seconds. Afterwards, the adhesive composition undergoes a steady state shear ramp from 0.01 sec⁻¹ to 4 sec⁻¹ (first flow test) and the shear ramp is then reversed (second flow test, shear rate from 4 sec⁻¹ to 0.01 sec⁻¹). Shear rate, shear stress, and viscosity were probed simultaneously. Viscosities at different shear rates were reported from the second flow test. The Thixotropic Index of the adhesive composition is defined as the viscosity at a shear rate of 0.01 sec⁻¹ divided by the viscosity at a shear rate of 1.0 sec⁻¹.

Sag performance of the adhesive compositions was measured by placing 1 g of mixed adhesive composition in a 20 × 20 mm area on a graphical notepad. The notepad was then positioned vertically and sag was measured as the distance the bead of adhesive traveled from the initial area on the notepad. The total sag of the adhesive composition was reported after 45 minutes of standing vertically.

Overlap Shear was determined according to ASTM D1002 as follows. 4 × 1 × 0.033 inch (101.6 × 25.4 × 0.84 mm) 1018 cold rolled steel coupons were degreased by cleaning twice with "GENERAL PURPOSE ADHESIVE CLEANER, 08987", then abraded with a grade "80+ CUBITRON II ROLOC" grinding disc, both obtained from 3M Company, to remove any oxidized coating on the bonding surface. A thin layer of adhesive was applied to both coupons over a 10 mm × 25 mm bond area with a small bead of the adhesive composition applied to one lap prior to clamping the laps together with 0.75 inch binder clips on each side. Excess adhesive was then removed with a metal spatula. The resulting assembly was cured at 21° C. for at least 1 day prior to post-baking at 80° C for 2 hours. The assembly was kept 1 day at ambient conditions after postbake. The overlap shear samples were tested with a pull rate of 10 mm/min on an Instron 68TM. The failure load was recorded. The quoted lap shear strengths were calculated as failure load/(width of the bond × length of the bond). Results listed represent an average of at least 3 test samples per Example. The uncertainty is reported as the standard deviation of the lap shear strengths of the at least 3 test samples per Example.

The rheological, sag, and overlap shear properties of the adhesive compositions are summarized in Table 5.

**TABLE 5. Comparative Examples 1-3 and Examples 1-2 (Adhesive Compositions)**

| | Second Part | First Part | Viscosity at 0.01 sec⁻¹, Pa·s | Viscosity at 0.1 sec⁻¹, Pa·s | Viscosity at 1 sec⁻¹, Pa·s | Thixotropic Index | Sag at 5 minutes, mm | Total Sag, mm | Overlap Shear Strength, MPa |
|---|---|---|---|---|---|---|---|---|---|
| Comparative Example 1 | F | A | 4185 | 1039 | 298 | 14.0 | 3 | 6 | 15.9 ± 0.3 |
| Comparative Example 2 | F | B | 2936 | 792 | 258 | 11.4 | 13 | 20 | 17 ± 0.6 |
| Comparative Example 3 | F | C | 4206 | 1054 | 315 | 13.4 | 3 | 5 | 15.3 ± 0.5 |
| Example 1 | F | D | 3580 | 911 | 290 | 12.3 | 8 | 13 | 17.2 ± 0.3 |
| Example 2 | F | E | 3429 | 895 | 287 | 11.9 | 10 | 17 | 14.2 ± 1.6 |

### Compositions G-K (First Part)

First part compositions were weighed out according to weight fractions listed in the Table 6 into appropriately sized DAC mixing cups. The components of Compositions G-K were mixed using a DAC 600 FVZ SPEED MIXER (FlackTek Inc.) at 2,300 RPM for 5-minute intervals until the mixture was homogeneous. The amine equivalent weights for Compositions G-K were 1-3 were all 103 grains/equivalent.

**TABLE 6A. Compositions of First Part (G-K)**

| COMPONENT | COMPOSITION, weight percent of components | | | | |
|---|---|---|---|---|---|
| | G | H | I | J | K |
| PE-1 | 55.8 | | | | |
| PE-2 | | 55.8 | | | |
| PE-3 | | | 55.8 | | |
| PE-4 | | | | 55.8 | |
| PE-5 | | | | | 55.8 |
| NBDA | 23.4 | 23.4 | 23.4 | 23.4 | 23.4 |
| CAN | 0.34 | 0.34 | 0.35 | 0.34 | 0.34 |
| **POLYTHF170** | 15.6 | 15.6 | 15.6 | 15.6 | 15.6 |
| K54 | 2.34 | 2.34 | 2.34 | 2.34 | 2.34 |
| TS720 | 2.60 | 2.60 | 2.60 | 2.60 | 2.60 |

**Table 6B. Rheology of First Part (G-K)**

| COMPONENT | COMPOSITION | | | | |
|---|---|---|---|---|---|
| | G | H | I | J | K |
| Viscosity at 0.01 s⁻¹ | 5,829 | 183 | 4,605 | 1.591 | 309 |
| Viscosity at 0.1 s⁻¹ | 970 | 100 | 810 | 335 | 137 |
| Viscosity at 1 s⁻¹ | 222 | 62 | 197 | 100 | 66 |
| Thixotropic index | 26 | 3 | 23 | 16 | 5 |

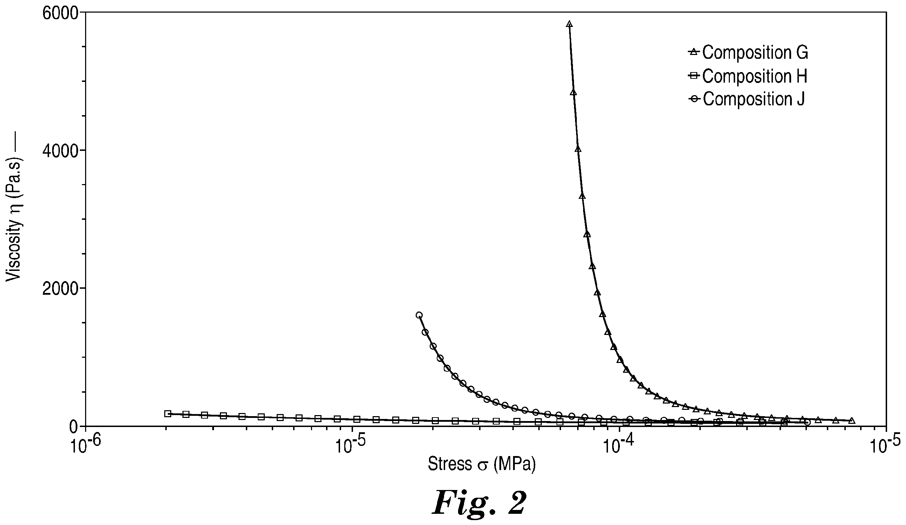

FIG. 2 is a plot of viscosity (Pa-s) versus stress (MPa) for First Part Compositions G, H, and J. Composition G contained premix PE-1, which included only the second CSR particles without a surface modifying epoxy group but not the first CSR particles that have a surface modifying epoxy group. Composition H contained PE-2, which included only the first CSR particles that have a surface modifying epoxy group but not the second CSR particles without the surface modifying epoxy group. Composition J contained PE-4, which included both the first CSR particles and the second CSR particles. Composition J can be more easily adjusted than either Composition G or H to obtain the desired rheological properties.

### Compositions L-O (Second Part)

Second part compositions corresponding to the weight fractions listed in Table 7 were prepared by measuring the components into a DAC mixing cups. The components of Compositions L-O were mixed using a DAC 600 FVZ SPEEDMIXER at 2,300 RPM for 5-minute intervals until the mixture was homogeneous. The epoxy equivalent weights for Compositions L-0 were all 180 grams/equivalent.

**TABLE 7. Second Part Compositions (L-O)**

| COMPONENT | I COMPOSITION, weight percent of components | | | |
|---|---|---|---|---|
| | L | M | N | O |
| EPON828 | 26.7 | 26.5 | 26.6 | 26.7 |
| MX257 | | 2.3 | 4.5 | 6.6 |
| MX416 | 50.4 | 50.4 | 50.4 | 50.4 |
| MX154 | 22.9 | 20.8 | 18.5 | 16.3 |

### Examples 3-4 and Comparative Examples 4-5 (Adhesive Compositions)

For the following Examples and Comparative Examples, 4.25 parts by weight of a second part composition and 2 parts by weight of a first part composition were measured into DAC mixing cups, hand mixed for 1 minute, and speed mixed using a DAC 600.2 VAC-LR SPEEDMIXER (FlackTek Inc for 4 minutes under vacuum program (800 RPM, 20 sec, atm; 800 RPM, 40 sec, 500 mbar; 900 RPM, 120 sec, 50 mbar: 1000 rpm, 60 see, 50 mbar) to form an adhesive composition. The ratio of amine equivalents to epoxy equivalents were all in a range of 1.0 to 1.22.

The rheological, sag, and overlap shear properties of the adhesive compositions are summarized in Table 8.

**TABLE 8. Comparative Examples 4-5 and Examples 3-5 (Adhesive Compositions)**

| | Second Part | First Part | Viscosity at 0.01 sec⁻¹, Pa·s | Viscosity at 0.1 sec⁻¹, Pa·s | Viscosity at 1 sec⁻¹, Pa·s | Thixotropic Index | Sag at 5 minutes, mm | Sag at 10 minutes, mm | Total Sag, mm | Overlap Shear Strength, MPa |
|---|---|---|---|---|---|---|---|---|---|---|
| Comparative Example 4 | L | G | 2456 | 731 | 251 | 9.8 | 15 | 21 | 27 | 13.3 ± 1.4 |
| Comparative Example 5 | F | H | 1282 | 486 | 201 | 6.4 | 44 | 56 | 68 | 15.1 ± 0.5 |
| Example 3 | M | I | 1977 | 597 | 224 | 8.8 | 22 | 32 | 42 | 15.5 ± 0.4 |
| Example 4 | N | J | 1842 | 569 | 218 | 8.4 | 26 | 35 | 46 | 14.7 ± 0.5 |
| Example 5 | O | K | 1555 | 518 | 214 | 7.3 | 30 | 40 | 49 | 15.5 ± 0.8 |

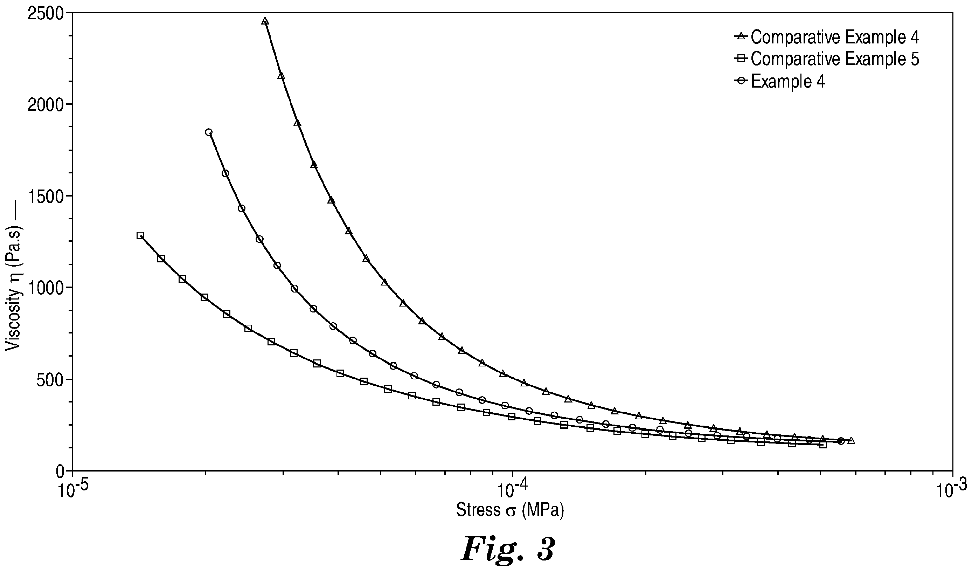

FIG. 3 is a plot of viscosity (Pa-s) versus stress (MPa) for the curable compositions of Comparative Example 4, Comparative Example 5, and Example 4. Comparative Example 4 was formed from first part composition G, which included only the second CSR particles without a surface modifying epoxy group but not the first CSR particles that have a surface modifying epoxy group. Comparative Example 5 was formed from first part composition H, which included only the first CSR particles that have a surface modifying epoxy group but not the second CSR particles without the surface modifying epoxy group. Example 4 was formed from first part composition J, which included both the first CSR particles and the second CSR particles. Example 4 can be more easily adjusted than either Comparative Examples 4 or 5 to obtain the desired rheological properties.

### Preparatory Examples 6 (Premix for First Part)

Preparatory Example 6 was prepared by first combining TTD, POLYTHF170, NBDA, and CAN in a DAC mixing cup and hand mixing until the CAN was fully dissolved. Both MX154 and MX257 were then added and the mixture was mixed in a DAC 600 FVZ SPEEDMIXER at 2,300 RPM for 5-minute intervals until the mixture was homogeneous. Lastly, K54 was added and the mixture was mixed using the DAC 600 FVZ SPEEDMIXER at 2,300 RPM for 5 minutes. The composition of Preparatory Example 6 is listed in Table 9.

**TABLE 9. Premix for First Part (PE-6)**

| COMPONENT | COMPOSITION, weight percent of components |
|---|---|
| | PE-6 |
| TTD | 11.0 |
| POLYTHF170 | 17.5 |
| NBDA | 26.25 |
| CAN | 0.58 |
| MX154 | 21.0 |
| MX257 | 21.0 |
| K54 | 2.6 |

### Compositions P-Q (First Part)

First part compositions were weighed out according to weight fractions listed in the Table 10 into appropriately sized DAC mixing cups. The components of Compositions P-Q were mixed using a DAC 600 FVZ SPEEDMIXER (FlackTek Inc.) at 2,300 RPM for 5-minute intervals until the mixture was homogeneous. Compositions P and Q have an amine equivalent weight of 109 grams/equivalent and 97 grams/equivalent. respectively.

**TABLE 10. First Part Composition (P-Q)**

| COMPONENT | COMPOSITION, weight percent of components | |
|---|---|---|
| | P | Q |
| PE-6 | 82.6 | 70.0 |
| TTD | 3.5 | 6.0 |
| POLYTHF170 | 5.5 | 9.5 |
| NBDA | 8.2 | 14.2 |
| CAN | 0.2 | 0.3 |

### Examples 6-7 (Adhesive Compositions)

For the following Examples, 4.33 parts by weight of a second part composition and 2 parts by weight of a first part composition were measured into DAC mixing cups, hand mixed for 1 minute, and speed mixed using a DAC 600.2 VAC-LR SPEEDMIXER (FlackTek Inc for 4 minutes under vacuum program (800 RPM, 20 sec, atm; 800 RPM, 40 sec, 500 mbar; 900 RPM, 120 sec, 50 mbar: 1000 rpm, 60 sec, 50 mbar) to form an adhesive composition.

The rheological, sag, and overlap shear properties of the adhesive compositions are summarized in Table 11.

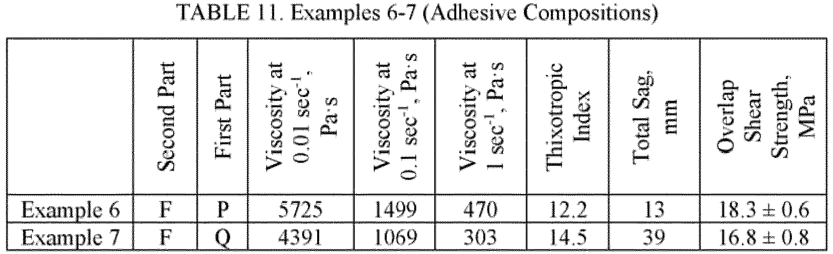

The preceding description, given in order to enable one of ordinary skill in the art to practice the claimed disclosure, is not to be construed as limiting the scope of the disclosure, which is defined by the claims.

## Claims

1. A curable composition comprising:
a) a first part comprising a reaction product of a first reaction mixture comprising
1) 55 to 80 weight percent of a polyamine based on a total weight of the first part, the polyamine having at least two -NHR¹ groups wherein each R¹ is independently hydrogen, alkyl, aryl, aralkyl, or alkaryl;
2) 5 to 25 weight percent of a first epoxy resin based on the total weight of the first part, the first epoxy resin being reactive with the polyamine;
3) 2 to 12 weight percent of a first core-shell rubber particle based on the total weight of the first part, the first core-shell rubber particle being dispersed in the first part and having a surface modified epoxy-containing group that is reactive with the polyamine; and
4) 1 to 12 weight percent of a second core-shell rubber particle based on the total weight of the first part, the second-core shell rubber particle being dispersed in the first part and free of the surface-modifying epoxy-containing group; and
5) 0 to 10 weight percent of a curing agent based on the total weight of the first part; and
6) 0 to 15 weight percent of an inorganic filler based on the total weight of the first part; and
b) a second part comprising
1) a second epoxy resin; and
2) a third core-shell rubber particle and/or a fourth core-shell rubber particle, the third core-shell rubber particle and/or the fourth core-shell rubber particle being dispersed in the second part, wherein the third core-shell rubber particle has a surface modified epoxy-containing group and the fourth core-shell rubber particle is free of the surface modified group.

2. The curable composition of claim 1, wherein the first part comprises 30 to 60 weight percent of the polyamine that is unreacted with the first epoxy resin and/or the first core shell rubber particles, the amount being based on the total weight of the first part.

3. The curable composition of claim 1 or 2, wherein the first part comprises a plurality of different polyamines.

4. The curable composition of any one of claims 1 to 3, wherein the inorganic filler in the first part is a thixotropic agent.

5. The curable composition of any one of claims 1 to 4, wherein the second part composition comprises 75 to 99 weight percent of the second epoxy resin and 1 to 25 weight percent of the third core-shell rubber particle and/or the fourth core-shell rubber particle.

6. The curable composition of claim 5, wherein the second part comprises 1 to 25 weight percent third core-shell rubber particles and/or 0 to 10 weight percent of the fourth core-shell rubber particle with a total amount of the third core-shell rubber particles plus the fourth core-shell rubber particles being no greater than 25 weight percent based on the total weight of the second part.

7. The curable composition of any one of claims 1 to 6, wherein the first part has an amine hydrogen equivalent weight in a range of 50 to 200 grams/equivalent.

8. The curable composition of any one of claims 1 to 7, wherein a ratio of the amine hydrogen equivalent weight to epoxy equivalent weight is in a range of 2:1 to 1:2.

9. The curable composition of any one of claims 1 to 8, wherein a weight ratio of the second part that is mixed with the first part is in a range of 1:1 to 4:1.

10. A method of making an article comprising providing the curable composition of any one of claims 1 to 9, preparing a mixture by combining the first part and the second part, positioning the mixture on a first substrate, optionally positioning a second substrate adjacent to the mixture opposite the first substrate, and curing the mixture.

## Patentansprüche

1. Eine härtbare Zusammensetzung, umfassend:
a) einen ersten Teil, umfassend ein Reaktionsprodukt einer ersten Reaktionsmischung, umfassend
1) zu 55 bis 80 Gewichtsprozent ein Polyamin, basierend auf einem Gesamtgewicht des ersten Teils, wobei das Polyamin mindestens zwei -NHR¹-Gruppen aufweist, wobei jedes R¹ unabhängig Wasserstoff, Alkyl, Aryl, Aralkyl oder Alkaryl ist;
2) zu 5 bis 25 Gewichtsprozent ein erstes Epoxidharz basierend auf dem Gesamtgewicht des ersten Teils, wobei das erste Epoxidharz mit dem Polyamin reaktiv ist;
3) zu 2 bis 12 Gewichtsprozent ein erstes Kern-Schale-Gummipartikel, basierend auf dem Gesamtgewicht des ersten Teils, wobei das erste Kern-Schale-Gummipartikel in dem ersten Teil dispergiert ist und eine oberflächenmodifizierte, Epoxid enthaltende Gruppe aufweist, die mit dem Polyamin reaktiv ist; und
4) zu 1 bis 12 Gewichtsprozent ein zweites Kern-Schale-Gummipartikel, basierend auf dem Gesamtgewicht des ersten Teils, wobei das zweite Kern-Schale-Gummipartikel in dem ersten Teil dispergiert ist und frei von der oberflächenmodifizierenden, Epoxid enthaltenden Gruppe ist; und
5) zu 0 bis 10 Gewichtsprozent ein Aushärtungsmittel, basierend auf dem Gesamtgewicht des ersten Teils; und
6) zu 0 bis 15 Gewichtsprozent einen anorganischen Füllstoff, basierend auf dem Gesamtgewicht des ersten Teils; und
b) einen zweiten Teil, umfassend
1) ein zweites Epoxidharz; und
2) ein drittes Kern-Schale-Gummipartikel und/oder ein viertes Kern-Schale-Gummipartikel, wobei das dritte Kern-Schale-Gummipartikel und/oder das vierte Kern-Schale-Gummipartikel in dem zweiten Teil dispergiert ist/sind, wobei das dritte Kern-Schale-Gummipartikel eine oberflächenmodifizierte, Epoxid enthaltende Gruppe aufweist und das vierte Kern-Schale-Gummipartikel frei von der oberflächenmodifizierten Gruppe ist.

2. Die härtbare Zusammensetzung nach Anspruch 1, wobei der erste Teil zu 30 bis 60 Gewichtsprozent das Polyamin umfasst, das nicht mit dem ersten Epoxidharz und/oder den ersten Kern-Hülle-Gummipartikeln reagiert hat, wobei die Menge auf dem Gesamtgewicht des ersten Teils basiert.

3. Die härtbare Zusammensetzung nach Anspruch 1 oder 2, wobei der erste Teil eine Mehrzahl von verschiedenen Polyaminen umfasst.

4. Die härtbare Zusammensetzung nach einem der Ansprüche 1 bis 3, wobei der anorganische Füllstoff in dem ersten Teil ein thixotropes Mittel ist.

5. Die härtbare Zusammensetzung nach einem der Ansprüche 1 bis 4, wobei die zweite Teilzusammensetzung zu 75 bis 99 Gewichtsprozent das zweite Epoxidharz und zu 1 bis 25 Gewichtsprozent das dritte Kern-Schale-Gummipartikel und/oder das vierte Kern-Schale-Gummipartikel umfasst.

6. Die härtbare Zusammensetzung nach Anspruch 5, wobei der zweite Teil zu 1 bis 25 Gewichtsprozent dritte Kern-Schale-Gummipartikel und/oder zu 0 bis 10 Gewichtsprozent vierte Kern-Schale-Gummipartikel umfasst, wobei eine Gesamtmenge der dritten Kern-Schale-Gummipartikel plus der vierten Kern-Schale-Gummipartikel nicht größer als 25 Gewichtsprozent ist, basierend auf dem Gesamtgewicht des zweiten Teils.

7. Die härtbare Zusammensetzung nach einem der Ansprüche 1 bis 6, wobei der erste Teil ein Amin-Wasserstoff-Äquivalentgewicht in einem Bereich von 50 bis 200 Gramm/Äquivalent aufweist.

8. Die härtbare Zusammensetzung nach einem der Ansprüche 1 bis 7, wobei ein Verhältnis des Amin-Wasserstoff-Äquivalentgewichts zu EpoxidÄquivalentgewicht in einem Bereich von 2 : 1 bis 1 : 2 liegt.

9. Die härtbare Zusammensetzung nach einem der Ansprüche 1 bis 8, wobei ein Gewichtsverhältnis des zweiten Teils, der mit dem ersten Teil gemischt wird, in einem Bereich von 1 : 1 bis 4 : 1 liegt.

10. Ein Verfahren zum Herstellen eines Gegenstands, umfassend das Bereitstellen der härtbaren Zusammensetzung nach einem der Ansprüche 1 bis 9, ein Zubereiten einer Mischung durch Kombinieren des ersten Teils und des zweiten Teils, ein Positionieren der Mischung auf einem ersten Substrat, optional das Positionieren eines zweiten Substrats angrenzend an der Mischung gegenüber dem ersten Substrat und das Aushärten der Mischung.

## Revendications

1. Composition durcissable comprenant :
a) une première partie comprenant un produit réactionnel d'un premier mélange réactionnel comprenant
1) 55 à 80 pour cent en poids d'une polyamine sur la base d'un poids total de la première partie, la polyamine ayant au moins deux groupes -NHR¹, dans laquelle chaque R¹ est indépendamment un hydrogène, un alkyle, un aryle, un aralkyle ou un alkaryle ;
2) 5 à 25 pour cent en poids d'une première résine époxy sur la base du poids total de la première partie, la première résine époxy étant réactive avec la polyamine ;
3) 2 à 12 pour cent en poids d'une première particule de caoutchouc noyau-coquille sur la base du poids total de la première partie, la première particule de caoutchouc noyau-coquille étant dispersée dans la première partie et ayant un groupe époxy modifié en surface qui est réactif avec la polyamine ; et
4) 1 à 12 pour cent en poids d'une deuxième particule de caoutchouc noyau-coquille sur la base du poids total de la première partie, la deuxième particule de caoutchouc noyau-coquille étant dispersée dans la première partie et exempte du groupe époxy modifiant la surface ; et
5) 0 à 10 pour cent en poids d'un agent de durcissement sur la base du poids total de la première partie ; et
6) 0 à 15 pour cent en poids d'une charge inorganique sur la base du poids total de la première partie ; et
b) une seconde partie comprenant
1) une seconde résine époxy ; et
2) une troisième particule de caoutchouc noyau-coquille et/ou une quatrième particule de caoutchouc noyau-coquille, la troisième particule de caoutchouc noyau-coquille et/ou la quatrième particule de caoutchouc noyau-coquille étant dispersées dans la seconde partie, dans laquelle la troisième particule de caoutchouc noyau-coquille a un groupe époxy modifié en surface et la quatrième particule de caoutchouc noyau-coquille est exempte du groupe modifié en surface.

2. Composition durcissable selon la revendication 1, dans laquelle la première partie comprend 30 à 60 pour cent en poids de la polyamine qui n'a pas réagi avec la première résine époxy et/ou les premières particules de caoutchouc noyau-coquille, la quantité étant basée sur le poids total de la première partie.

3. Composition durcissable selon la revendication 1 ou 2, dans laquelle la première partie comprend une pluralité de polyamines différentes.

4. Composition durcissable selon l'une quelconque des revendications 1 à 3, dans laquelle la charge inorganique dans la première partie est un agent thixotrope.

5. Composition durcissable selon l'une quelconque des revendications 1 à 4, dans laquelle la composition de la seconde partie comprend 75 à 99 pour cent en poids de la seconde résine époxy et 1 à 25 pour cent en poids de la troisième particule de caoutchouc noyau-coquille et/ou de la quatrième particule de caoutchouc noyau-coquille.

6. Composition durcissable selon la revendication 5, dans laquelle la seconde partie comprend 1 à 25 pour cent en poids des troisièmes particules de caoutchouc noyau-coquille et/ou 0 à 10 pour cent en poids de la quatrième particule de caoutchouc noyau-coquille, avec une quantité totale de troisièmes particules de caoutchouc noyau-coquille plus les quatrièmes particules de caoutchouc noyau-coquille n'étant pas supérieure à 25 pour cent en poids sur la base du poids total de la seconde partie.

7. Composition durcissable selon l'une quelconque des revendications 1 à 6, dans laquelle la première partie a un poids équivalent d'hydrogène d'amine dans une plage comprise entre 50 et 200 grammes/équivalent.

8. Composition durcissable selon l'une quelconque des revendications 1 à 7, dans laquelle un rapport entre le poids équivalent d'hydrogène d'amine et le poids équivalent d'époxy est dans une plage comprise entre 2:1 et 1:2.

9. Composition durcissable selon l'une quelconque des revendications 1 à 8, dans laquelle un rapport en poids de la seconde partie qui est mélangée à la première partie est dans une plage comprise entre 1:1 et 4:1.

10. Procédé de fabrication d'un article comprenant la fourniture de la composition durcissable selon l'une quelconque des revendications 1 à 9, la préparation d'un mélange en combinant la première partie et la seconde partie, le positionnement du mélange sur un premier substrat, éventuellement le positionnement d'un second substrat adjacent au mélange, à l'opposé du premier substrat, et le durcissement du mélange.
